# EUROPEAN PATENT SPECIFICATION

(11) **EP 3 080 765 B1**
(45) Date of publication and mention of the grant of the patent: **29.04.2026**
(21) Application number: 14777114.1
(22) Date of filing: 18.09.2014
(51) Int. Cl.: G06Q 30/00, G06Q 30/02

(54) **METHOD AND SERVER FOR PROVIDING FARE AVAILABILITIES, SUCH AS AIR FARE AVAILABILITIES**
VERFAHREN UND SERVER ZUR BEREITSTELLUNG VON PREISVERFÜGBARKEITEN WIE ETWA FLUGPREISVERFÜGBARKEITEN
PROCÉDÉ ET SERVEUR POUR FOURNIR DES DISPONIBILITÉS DE TARIF, TELLES QUE DES DISPONIBILITÉS DE TARIF AÉRIEN

(30) Priority: 11.12.2013 WO PCT/GB2013/053261; 11.12.2013 US 201314103016
(43) Date of publication of application: 19.10.2016
(60) Divisional application: 23213785.1
(73) Proprietor: Skyscanner Technology Limited, London W1D 4AL (GB)
(72) Inventor: WILLIAMS, Gareth, Edinburgh EH3 9EN (GB)
(74) Representative: Langley, Peter James
(86) International application number: PCT/GB2014/052846
(87) International publication number: WO 2015/087036

(56) References cited:
- US-A1- 2003 105 653
- US-A1- 2011 225 188
- AERONAUTIQUE INDUSTRIE ET AL: "ONLINE DECISION-AIDS AND PRICING: AN EMPIRICAL ANALYSIS OF THE AIRLINE INDUSTRY AIDE A LA DECISION EN LIGNE ET FIXATION DE PRIX : UNE ANALYSE EMPIRIQUE DE", 1 January 2008 (2008-01-01), pages 1 - 14, XP093133539, Retrieved from the Internet <URL:https://aisel.aisnet.org/icis2008/136/> [retrieved on 20240221]

## Description

### BACKGROUND OF THE INVENTION

### 1. Field of the Invention

The field of the invention relates to methods, servers and computer program products for inferring which air fare classes are available.

### 2. Technical Background

Global Distribution Systems (GDS) gather schedules from OAG (Official Airline Guide: see e.g. www.oag.com), fares from ATPCO, and fare class availability from the airlines, and store this information in their own systems. This stored information is periodically updated from those sources. Running an availability query against such a GDS system can be slow, costs money and requires the use of energy to perform the searches and to transmit the results. Running an availability query against many airlines requires accessing multiple servers, which is also slow, and requires the use of energy to perform the search and to transmit the results.

Storing fare class availabilities for all possible routes between all possible airports for a sufficiently long time horizon (eg. 1 year) would require a very substantial data storage capacity.

### 3. Discussion of Related Art

FR2841018(B1) discloses a method for loading flight schedule modifications comprising the steps of: receiving at least one set of flight modifications; retrieval of individual modifications within the set and storage within a register for future scheduling; simulating reassignment of the reservations concerned by the flight schedule modification by accessing, via the reservation distribution server, both the records and flight schedule databases; and final updating of the flight schedule databases of the reservation inventory.

By way of example, in the context of airfare flight pricing, flight pricing is conventionally obtained from a GDS (see Section C for a more detailed explanation of how GDS systems work, and more generally about how flight pricing works). Flight comparison services, such as Skyscanner, and some airlines, pay a fee to obtain live, bookable prices from a GDS; these prices are the actual bookable prices that a potential passenger can book. However, many potential passengers are often just browsing and do not need definitively accurate bookable prices, but instead would be satisfied with an estimate. Consequently, it is very useful if an accurate price estimating method and system could be devised, especially if it removes the dependency on accessing third party resources, like a GDS, which not only cost money to access, but may not be available to provide the required information.

It is therefore desirable to provide a way of providing estimates of fare class availabilities between any two airports over a time period which is not as slow as accessing one or more remote servers many times to provide the estimates, and which requires less energy to provide the estimates of fare class availabilities, and which does not require the enormous data storage capacity needed to store results in advance for all possible queries.

US20030105653A1 discloses a method of presenting offers of travel services. Rubin and Mantin: "ONLINE DECISION-AIDS AND PRICING: AN EMPIRICAL ANALYSIS OF THE AIRLINE INDUSTRY", 1 January 2008 (2008-01-01), pages 1-14, ICIS 2008 Proceedings, XP093133539, discloses that a body of Information Systems research has shown that decision aids can have prominent effects on decision processes, and there is support for the cost-benefit model, suggesting that cognitive effort can substantially affect decision strategy and outcome. US20110225188A1 discloses a method and system for processing travel-related data.

### SUMMARY OF THE INVENTION

The following aspects are useful for the understanding of the invention, which is defined in the appended claims.

According to a first aspect of this disclosure, there is provided a method of inferring fare class availability for a specific flight or flights by:
(a) receiving observable, live bookable prices for that flight(s), in which that price information is not accompanied by complete fare class information for those flight(s);
(b) comparing the observable, live bookable prices with a set of prices calculated from stored data, such as valid itinerary data, fare data such as FROP data, and tax/surcharge data; and
(c) determining which fare class was used in the observable live bookable price by determining which fare class was used in the calculated price that matches most closely to the observable live bookable price.

An advantage is that the method does not require the time or energy required to access one or more remote servers many times to actually establish fare availability and to calculate fare prices so as to store results in advance for all possible queries. A further advantage is that the method does not require the enormous data storage capacity needed to store results in advance for all possible queries. A computer carrying out the method operates in a new way, and the perceived problems are overcome by the method. The method may be one wherein the stored data can be from cached, previously obtained live, bookable prices.

The method may be one wherein a fare class defines some or all of the applicable rules or restrictions applying to a specific fare for a specific flight or flights and include one or more of: class code, such as C (business full fare) or Y (economy full fare), fare type, such as first class or economy; categories, such as eligibility, minimum stay, stopovers, or penalties.

The method may be one wherein an inferred fare class price is included with each inferred fare class availability.

The method may be one wherein step (c) includes sending the inferred fare class availability to a server.

The method may be one wherein the server is an airline server.

The method may be one wherein step (b) includes using rules in order to analyse patterns in the set of prices calculated from stored data.

The method may be one wherein calculating the set of prices calculated from stored data in step (b) includes building a statistical model from historical prices, identifying missing quote candidates, and pricing quote candidates based on the statistical model.

The method may be one wherein inputs for the statistical model include reversed route equivalents.

According to a second aspect of this disclosure, there is provided a server configured to perform a method of any aspect of the first aspect of this disclosure.

According to a third aspect of this disclosure, there is provided a computer program product embodied on a non-transient storage medium, the computer program product when running on a computer arranged to infer fare class availability for a specific flight or flights, the computer program product when running on a computer arranged to:
(a) receive observable, live bookable prices for that flight(s), in which that price information is not accompanied by complete fare class information for those flight(s);
(b) compare the observable, live bookable prices with a set of prices calculated from stored data, such as valid itinerary data, fare data such as FROP data, and tax/surcharge data; and
(c) determine which fare class was used in the observable live bookable price by determining which fare class was used in the calculated price that matches most closely to the observable live bookable price.

According to a first aspect of the invention, there is provided a computer-implemented method of inferring, from a Distribution System server response, which airfare classes are available, the method including the steps of:
(i) a computer server receiving a request for an airfare price, together with parameters defining the airfare,
(ii) configuring one or more processors to determine estimated prices from an incomplete historical price dataset by analysing patterns in that dataset, at any time with respect to step (i) above, wherein this step comprises:
   (a) obtaining historical price quotes from a computer data store;
   (b) grouping the historical price quotes by category;
   (c) deriving statistics for each group;
   (d) storing on a computer for each group a classifier including the derived statistics, and
   (e) identifying groups with stored classifiers to which the requested price corresponds;
(iii) configuring one or more processors to calculate estimates for the requested airfare price that satisfy the parameters, and calculating a set of estimates for the requested airfare price that satisfy the parameters over a specified date range using statistics from the stored classifiers corresponding to the identified groups;
(iv) sending the request to a Distribution System server for airfare prices;
(v) receiving from the Distribution System server the Distribution System server's airfare prices;
(vi) comparing the calculated set of estimates for the requested airfare price from step
(iii) with the Distribution System server's airfare prices received in step (v) so as to infer an airfare class availability of the Distribution System server, and
(vii) the computer server providing the inferred airfare class availability of the Distribution System server to a computing device.

An advantage is that the method does not require the time or energy required to access one or more remote servers many times to actually establish fare availability and to calculate fare prices so as to store results in advance for all possible queries. A further advantage is that the method does not require the enormous data storage capacity needed to store results in advance for all possible queries. A computer carrying out the method operates in a new way, and the perceived problems are overcome by the method. Note that steps (ii) and (iii) in this method are not necessarily separate steps but may instead be part of the same step.

The method may be one wherein determination of estimated prices is performed by inferring, deriving or predicting estimated prices.

The method may be one wherein the Distribution System server is a Global Distribution System server.

The method may be one wherein an inferred fare class price is included with each inferred fare class availability.

The method may be one wherein step (vii) includes sending the inferred fare class availability to a server.

The method may be one wherein the server is an airline server.

The method may be one wherein step (ii) includes using rules in order to analyse patterns in the dataset.

The method may be one wherein step (ii) includes a naive Bayes classifier machine learning approach which produces a probabilistic model of prices, and that model is used to predict unobserved prices.

The method may be one wherein classifiers are trained using observed prices and sets of features that correspond to them.

The method may be one wherein the features relate to the request, and include one or more of: departure day of week, length of stay, stay Saturday, airline, time to travel, route, month.

The method may be one wherein a classifier then predicts the price of an unobserved price by being given a set of features and providing a most likely price to have those features.

The method may be one wherein features may be derived by training multiple models with different features and comparing the predictive accuracy of the different models.

The method may be one wherein step (ii) includes building a statistical model from historical prices, identifying missing quote candidates, and pricing quote candidates based on the statistical model.

The method may be one wherein estimating prices for each candidate quote occurs in the following steps: extracting category feature values from the quote; retrieving from a database a classifier trained for an extracted category; extracting all feature values from the quote candidate; classifying the candidate quote by calculating Bayes posterior probabilities for each price range stored in a classifier and choosing a price range class with a highest Bayes posterior probability, and attaching a price class to a candidate quote.

The method may be one wherein inputs for the statistical model include: list of routes, classifier categorization scheme, historical quotes, and a set of supported features with weights.

The method may be one wherein historical quotes are filtered by age.

The method may be one wherein inputs for the statistical model include reversed route equivalents.

The method may be one including the step of: including cached fare prices in the set of price estimates.

The method may be one wherein the price is for a journey that is a one-way journey.

The method may be one wherein the price is for a journey that is a return journey.

The method may be one wherein the price includes an air fare price.

The method may be one wherein the request comprises a flexible search request.

According to a second aspect of the invention, there is provided an inferring server configured to infer from a Distribution System server which airfare classes are available, the inferring server configured to:
(i) receive a request for an airfare price, together with parameters defining the airfare,
(ii) configure one or more processors to determine estimated prices from an incomplete historical price dataset by analysing patterns in that dataset, at any time with respect to (i) above, wherein the configuring comprises:
   (a) obtaining historical price quotes from a computer data store;
   (b) grouping the historical price quotes by category;
   (c) deriving statistics for each group;
   (d) storing on a computer for each group a classifier including the derived statistics, and
   (e) identifying groups with stored classifiers to which the requested price corresponds;
(iii) configure one or more processors to calculate estimates for the requested airfare price that satisfy the parameters, and calculate a set of estimates for the requested airfare price that satisfy the parameters over a specified date range using statistics from the stored classifiers corresponding to the identified groups;
(iv) send the request to a Distribution System server for airfare prices;
(v) receive from the Distribution System server the Distribution System server's airfare prices;
(vi) compare the calculated set of estimates for the requested airfare price from (iii) with the Distribution System server's airfare prices received in (v) so as to infer an airfare class availability of the Distribution System server, and
(vii) provide the inferred airfare class availability of the Distribution System server to a computing device.

According to a third aspect of the invention, there is provided a computer program product embodied on a non-transient storage medium, the computer program product when running on a computer arranged to infer from a Distribution System server which airfare classes are available, the computer program product when running on a computer arranged to:
(i) receive a request for an airfare price, together with parameters defining the airfare,
(ii) configure one or more processors to determine estimated prices from an incomplete historical price dataset by analysing patterns in that dataset, at any time with respect to (i) above, including
   (a) obtaining historical price quotes from a computer data store;
   (b) grouping the historical price quotes by category;
   (c) deriving statistics for each group;
   (d) storing on a computer for each group a classifier including the derived statistics, and
   (e) identifying groups with stored classifiers to which the requested price corresponds;
(iii) configure one or more processors to calculate a set of estimates for the requested airfare price that satisfy the parameters, and calculate estimates for the requested airfare price that satisfy the parameters over a specified date range using statistics from the stored classifiers corresponding to the identified groups;
(iv) send the request to a Distribution System server for airfare prices;
(v) receive from the Distribution System server the Distribution System server's airfare prices;
(vi) compare the calculated set of estimates for the requested airfare price from (iii) with the Distribution System server's airfare prices received in (v) so as to infer an airfare class availability of the Distribution System server, and
(vii) provide the inferred airfare class availability of the Distribution System server to a computing device.

According to a fourth aspect of the disclosure, there is provided a computer terminal in connection with a server of the second aspect of the invention, the computer terminal arranged to send a request defining a request for fare class availability for goods or services, such as airfares, together with parameters defining those goods or services, wherein the computer is further arranged to receive the outputted inferred fare class availability.

According to an fifth aspect of the disclosure, there is provided an item or a service, such as an airline ticket, and in which a fare class availability for that item or service is provided using a method according to the first aspect of the invention, or using a server according to the second aspect of the invention.

According to a sixth aspect of the disclosure, there is provided a web-based price comparison web site, with which end-users can interact by providing a request for fare class availability, and that web-based price comparison web site provides that request to a server that estimates the fare class availability using a method according to the first aspect of the invention.

### BRIEF DESCRIPTION OF THE DRAWINGS

The above and other aspects of the invention will now be described, by way of example only, with reference to the following Figures, in which:
**Figure 1** shows an example of a system for estimating prices from other prices, with the purpose of using those prices to augment a cache of observed fares.
**Figure 2** shows an example of how a 'difference' engine can be used to derive the availability of fare classes from a live update.
**Figure 3** shows examples of equations suitable for use in Naïve Bayes classification.
**Figure 4** shows an example in which feature values are represented by numbered areas and price ranges (buckets) represent frequency information.
**Figure 5** shows an example of a full training process.
**Figure 6** shows an example in which Naïve Bayes classifiers can be used to price each candidate quote placeholder.
**Figure 7** shows an example of a full process of inferring missing quotes.
**Figure 8** shows an example of connections between a server providing estimation services for fare availability and price, and input data sources, and output to partners and to users.
**Figure 9** shows an example of a user interface.
**Figure 10** shows an example of a user interface.
**Figure 11** shows an example of a system for performing a search process.
**Figure 12** shows an example of a user interface.
**Figure 13** shows an example of user interface output.
**Figure 14** shows an example of user interface output.
**Figure 15** shows an example of an architecture for browse searches.
**Figure 16** shows an example of an overall system architecture for a system which includes provision of estimation services for fare availability and price.
**Figure 17** shows an example GDS configuration.
**Figure 18** shows an example of fares regarding a fare class record, fare categories, and category data tables.
**Figure 19** shows an example of a process which provides fare pricing options.
**Figure 20** shows an example of a relationship between a pricing engine, AVS/NAVS, Seamless (polling), a cache DB and an airline host.
**Figure 21** shows an example system including an Availability Server.
**Figure 22** shows an example a graphical indication of a confidence range for estimated prices using a bar, which spans a price range from the lowest price to the highest price of a range in which the price is to be found. The bar is provided for a range of outward journey dates and for a range of return journey dates.
**Figure 23** shows an example of main components in a system for deriving fare class availability and of the flow of information in the system.
**Figure 24** shows an example of a process for deriving fare class availability.

### DETAILED DESCRIPTION

One implementation of the invention provides 'Model-Based Pricing'. It is described in section A below.

### A. MODEL BASED PRICING

There is provided flight price estimation using model based data interpolation.

### Background / Motivation

The price of a ticket for an itinerary is complex to compute - it is the result of calculations of possible routings, qualifying fares, and the availability of those fares. These calculations are typically performed in a Global Distribution System (GDS), and running a query against such a system can be slow and also costs money.

Airlines that file fares in a GDS typically use a pricing model that we refer to as 'scheduled'. The key thing to note about such a model is that if there is a return trip departing on day O₁, and returning on day R₁, the price of a return ticket P(O₁,R₁) is not equal to the sum of two single tickets P(O₁) + P(R₁). The alternative pricing model, which we will call 'budget' pricing is one where P(O₁,R₁) = P(O₁) + P(R₁).

Two important consequences of the scheduled pricing model are the limitations it puts on re-use of observed prices, and the space required to store them.

In a budget model, if two 'return' queries are made, one for dates O₁ R₁ and the other for dates O₂ R₂, the resulting prices P(O₁), P(R₁), P(O₂), and P(R₂) can be used to compute up to four return fares (i.e. P(O₁,R₁), P(O₁,R₂), P(O₂,R₁), P(O₂,R₂)), as well as having the four fares for use in one-way queries (P(O₁), P(R₁), P(O₂), and P(R₂)). If the query were run for a 'scheduled' model there would just be two fares i.e. P(O₁,R₁) and P(O₂,R₂). Thus in the budget model two queries enables us to answer eight queries, whereas in the scheduled model, two queries enables us to answer two queries.

Assuming that flight prices are only available for the current day and upcoming 364 days, all possible single and return fares on a route, can be found by performing 365 return queries. In the case of the scheduled model, there would need to be: 365*(365+1)/2 = 66,795 return queries, as well as 365 single queries in each direction. Thus in order to build a complete list of prices for a route, the scheduled model requires about 185 times more queries than the budget model.

If one had the result of all those queries, there would necessarily be about 185 times the required storage space in order to the save the fares.

The above is just an example for a route between two defined airports. In practice there are about 5,000 commercial airports in the world. Hence number of possible journeys between the airports is about (5,000)². Taking into account the number 365*(365+1)/2 = 66,795 of possible return queries described above, this leads to a total number of possible queries between all airports for a year of (5,000)²*365*(365+1)/2, which is about 10¹². The implied amount of data storage is very large indeed.

The massive increase in the number of queries needed to form a 'complete picture' of a scheduled model route combined with the costs of GDSs means that it is not practical (i.e. it is disadvantageous) to build such a cache. The result is then an incomplete cache, with 'holes' where fares have not been observed.

The prices, returned by the GDS, however, are the result of applying fare rules and availability. There are patterns and consistencies in the observed fares as a result. This example relies on using those patterns to allow us to interpolate the fares missing from the cache, using a model that reflects the fare rules that generated the prices in the first place.

### System for estimating prices from other prices

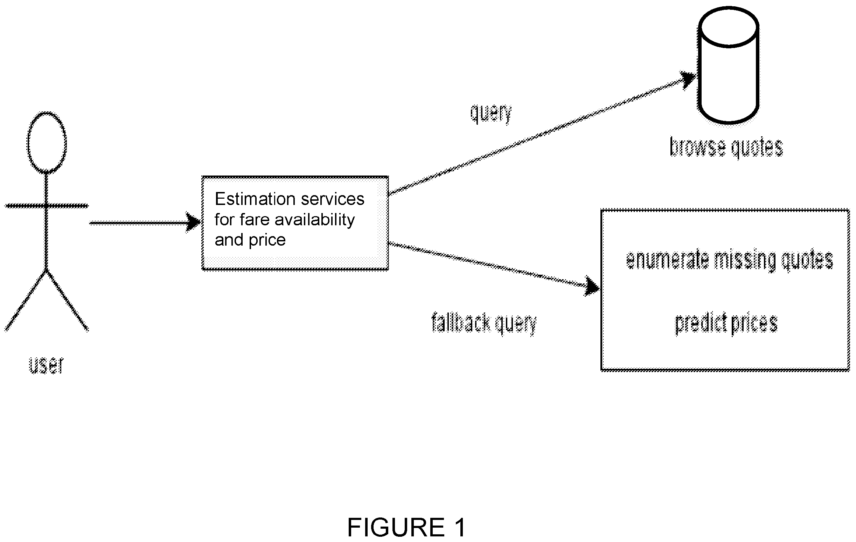

There is provided a system for estimating prices from other prices, with a purpose of using those prices to augment a cache of observed fares (e.g. observed by users requesting prices for live bookable fares). An example model is shown in **Figure 1****.**

The estimator uses statistics derived from the quotes in order to predict other quotes. A very simple estimator could compute that all missing fares are equal to the average of all observed fares. The level of prediction can be improved by making the model more sophisticated, in order to take into account the type of rules used to generate the fares in the first place.

For example, a common 'rule' that defines whether a fare is valid for an itinerary is whether the itinerary involves staying on a Saturday night. Typically such rules mean that dates that involve *not* spending Saturday night at the destination are much more expensive - the rule is designed to penalize business travellers who usually desire to only be away during the work week. Thus a better model could be calculated that comprises two averages - the average of all observed fares that *do* involve a Saturday night stay, and the average of all the observed fares that *do not* involve a Saturday night stay. The algorithm would then predict prices for previously unobserved date pairs, by firstly calculating whether there was a Saturday night between the date pair, and then returning the corresponding average. This results in an estimate with increased accuracy.

Similar improvements can be made to the model - for example, the price of travel varies depending on the day of the week - Mondays are typically more expensive than Wednesdays, thus calculating and using averages that also take into account the day of week would also potentially improve the model accuracy.

Therefore a statistical model may be provided for predicting fares, using statistics and rules which may have been derived by a human, for example. An alternative method of producing the statistical model is also possible - this approach uses a machine learning approach called a 'Naïve Bayes classifier' to produce a probabilistic model of fares, and that model is used to predict the unobserved fares. The classifier is trained using observed prices and sets of 'features' that correspond to them. The features relate to the query that generated the fares, and could include: departure day of week, length of stay, stay Saturday, airline, etc. The classifier then predicts the price of an unobserved fare by being given a set of features and providing the most likely price to have those features.

The statistical model for predicting prices can then be consulted in order to predict previously unobserved fares, or observed fares in the event of wanting to measure the accuracy of the model.

### Key Features and their Calculation

Features which may be used for training classifiers include:
- Stay Saturday
- Length of stay
- Day of week
- Time to travel
- Airline
- Website
- Route
- Date - at day and year-month level
- Month

These features have been derived by analysing all the fares listed in FROP (Fare Rule Output Product, from ATPCO (the Airline Tariff Publishing Company)) and determining which rules applied to the largest number of fares. For example, 54% of fares have a minimum stay rule, and 31% of all fares have a minimum stay rule requiring that Saturday night is spent at the destination. Therefore, the feature is likely to be a useful feature for classification on the basis of price. A more accurate estimate of the utility of features may be derived by training multiple models with different features and comparing the predictive accuracy of the different models.

### Benefits

- Estimation of missing flight price data
- Using features related to the generation of data to produce a superior predictive model

### Potential Market(s) and/or Area(s) of Application

The model may be used in the flight industry in order to estimate previously unobserved prices, in order to display them to users, or to determine whether it is worth querying to return the price e.g. is it likely to be good value.

The model may be used in other fields, which are presently not part of the claimed invention, where there is a disadvantage to obtaining a price (e.g. cost of querying), but where the price was generated by structured means (e.g. pricing rules). This includes travel products such as hotels, trains, and car hire cars; as well as other products with structured pricing, such as insurance.

### Other Applications

Consumer price comparison websites. Companies trying to price competitively by comparing prices with those of rivals.

### MODEL BASED PRICING - INFERRING MISSING QUOTES

Inferring of missing quotes may take place in two stages, training and estimation:
- training
   ∘ building statistical model from historical prices
- estimation
   o identifying missing quote candidates
   o pricing quote candidates based on statistical model

In an example, a statistical model is a set of Naive Bayes classifiers trained periodically (e.g. daily) with historical prices. Missing quotes are inferred based on route operators' data and priced using classifiers.

### Example of a Statistical model

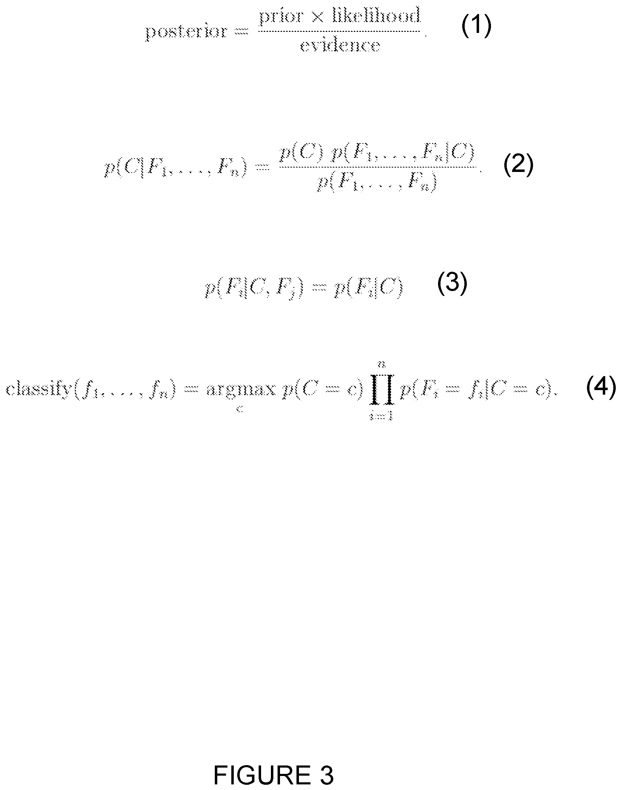

Naïve Bayes classification is based on dependency between the probability that an object described by a given set of features belongs to a given class and the probability that an object from this class is characterized by a given set of features: see Eqs. (1) and (2) in **Figure 3****.**

Eqs. (1) and (2) can be simplified to Eq. (3) in **Figure 3****.** In Eqs. (1)-(3):
- C is a class to which an input object can be classified (eg. in our case: price range e.g. 75-125 EUR)
- Fᵢ is a feature value (eg. in our case: Friday, Air France airline website etc.)

Classification can be expressed using Eq. (4) in **Figure 3****.**

For a given set of feature values we want to find a class (price range), where they occur most often and thus maximise the probability that a class characterizes the input set.

### Training

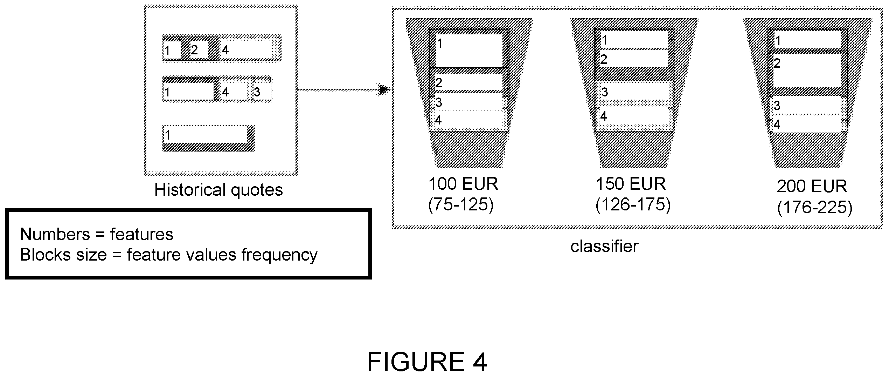

An intention of classifier training is to calculate how frequently feature values occur for observed price ranges. In a process shown for example in **Figure 4** feature values are represented by numbered areas and price ranges (buckets) represent frequency information (e.g. feature values quantity in range 75-125 EUR, 126-175 EUR etc.).

The following elements are inputted for an example training process:
- list of routes
- classifier categorization scheme
- historical quotes
- set of supported features with weights

A list of routes sets boundaries for training. A category defines a scope of a given classifier and is expressed by a set of feature values. An experimentally chosen category consists of a city-level route and airline (example: London - Paris, Air France), but other options are possible (e.g. city-level route without airline). There is always one classifier per category. A classifier is trained only with historical quotes matching its category (e.g. only quotes for London - Paris route operated by Air France).

In a first step of a training process, a given number of the most recent historical quotes with a certain maximum age is retrieved from a database. Categories are evaluated for every quote. Quotes are grouped by categories. Each group becomes a training set for one classifier.

A training set can be extended using quotes for reversed route equivalents. Example: for a historical quote on the route London Stansted - Rome Ciampino with Air France, a reversed route equivalent would be for Rome Ciampino - London Stansted with the same airline and other details like price. Quotes for reversed routes are included in training scaled by a weight adjusting its significance.

Next, for each group a classifier with the following statistical information extracted from quotes is built:
- a weighted number of quotes containing each distinct feature value
- a weighted number of quotes containing each distinct feature value per price range of given granularity
- a number of observed price ranges, quotes per price range and all quotes

Weights applied to a number of quotes can differ between features to emphasize a larger influence of some of them (e.g. a trip including a weekday may be more important than stay length).

The process ends with one classifier for each training set (e.g. one classifier for a London-Paris route operated by Air France) containing statistical information. A model is stored for future use. A classifier can be trained again e.g. periodically or when a number of historical quotes change.

A classifier may only be created if a certain number of quotes matching its category are available.

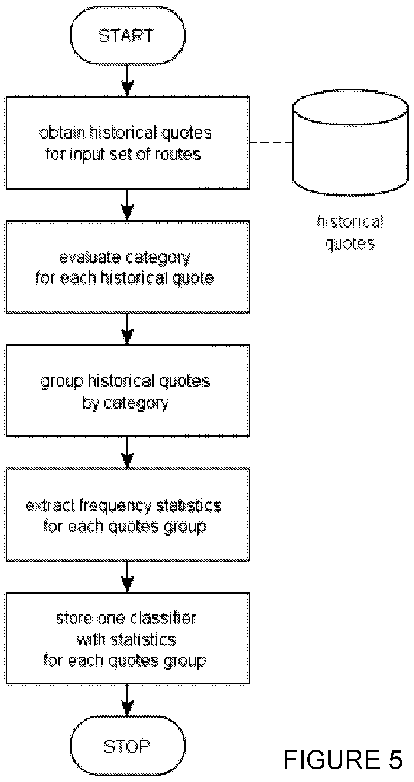

An example of a full training process is shown in **Figure 5****.**

Apart from parameters listed above, a training process can be parameterized by:
- a size of price ranges per route (e.g. 1 EUR, 5 EUR, 10 EUR)
- a weighting applied to reversed routes
- a weighting function applied based on quote age

### Estimating missing quotes

In an example, a user searches for one-way or return flights for a given route and dates range. A system responds to a query with a set of cheapest quotes from a database: up to one per each date (or dates pair - for return flights). The response may not include quotes for certain dates (date pairs). Missing quotes can be inferred using trained Naïve Bayes classifiers.

The following elements may be input for an inferring process:
- a route
- a list of dates (or date pairs) with missing cheapest quotes information

Classifiers can only be used to price existing quotes, so candidate quotes must be evaluated first. Candidates are combinations of every applicable airport pairs, date (dates pair), airline and agent available for queried route. A list is generated based on the process inputs and a route operators' database.

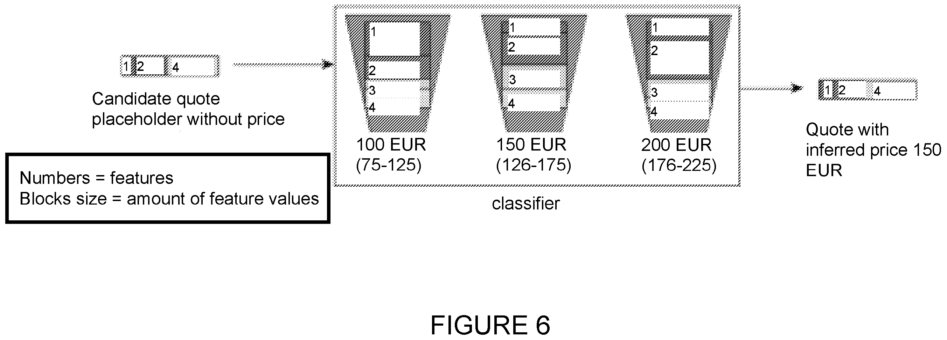

Next, Naïve Bayes classifiers can be used to price each candidate quote placeholder. See **Figure 6** for example.

Inferring prices may occur for each candidate quote in the following steps:
- extract category feature values from the quote
- retrieve from a database a classifier trained for an extracted category
- extract all feature values from the quote candidate
- classify the candidate quote by:
   ∘ calculating Bayes posterior probabilities for each price range stored in classifier
   ∘ choosing price range class with highest Bayes posterior probability
- attach price class to candidate quote

If no classifier exists for given candidate quote, a price is not inferred and a date (date pairs) slot remains empty.

A process can result in multiple priced quote candidates per date (dates pair). For this reason a next step is to choose a single quote for each date (dates pair). A choice can be made based on price e.g. cheapest quote per date (dates pair) is selected.

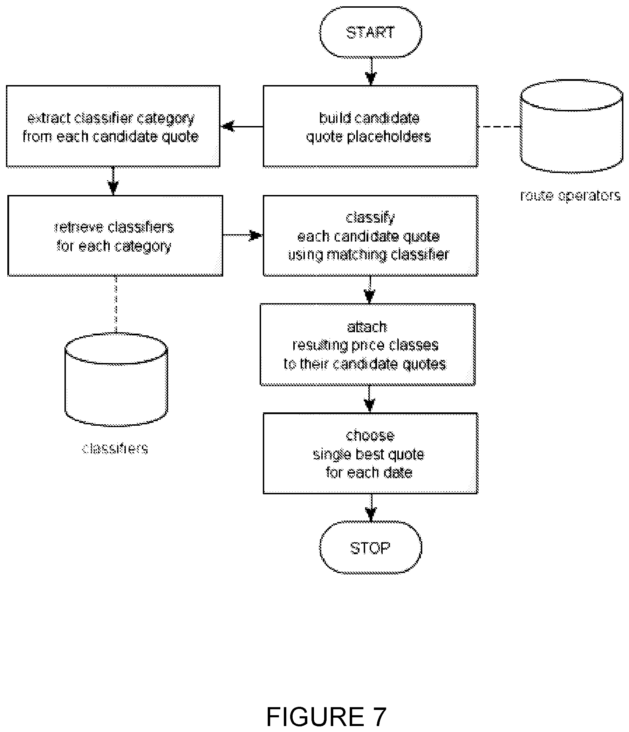

A final result of the process is up to one quote per input date (dates pair). Inferred quotes can be included in a response returned to a user. An example of a full process of inferring missing quotes is shown in **Figure 7****.**

Apart from parameters listed earlier, an inferring process can be parameterized by:
- a minimum Bayes posterior probability required to accept a classification result
- a maximum number of route operators involved in candidates' generation
- a random variation added to Bayes posterior probability to avoid ties

### Estimation methods which give a confidence to the price

Estimation methods may be provided which give a confidence to the price. e.g. we are 99% confident it is within $5, $1000, etc. Hence the estimation methods may provide for:
∘the calculation and return of those confidences.
∘the use of those confidences to decide whether to display a price to a user, or to show a probable range of prices to a user (eg. error bars).

A number of methods of estimating a price are capable of returning a measure of confidence for the price. For example, in the case of the Naïve Bayesian classifier, the selected class is the class with the highest probability, but that probability can be used as an indicator of the confidence in the estimate - the closer the probability is to 1 the more confident it is that the predicted price is the correct one.

The resulting confidence may be used in a number of ways. If there is a very low confidence in the estimate, the decision may be made:
∘ Not to show the estimate as it is not helpful for the user
∘ To trigger live retrieval of the price so that an exact value can be shown to the user

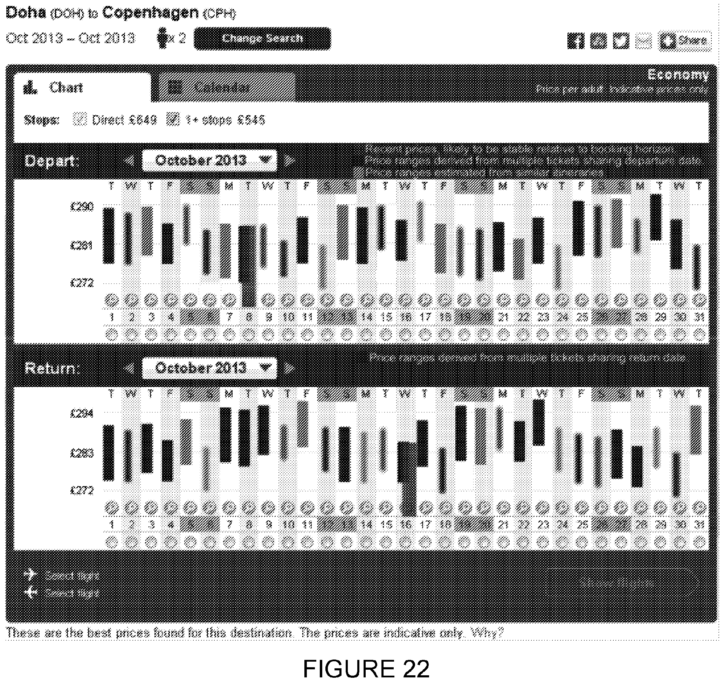

The confidence can be shown to the user. This could be indicated in a number of ways:
∘ A bar showing the range of likely values for the price (see **Figure 22** for example)
∘ Reducing the visibility / intensity of the displayed price (for example with the use of colouring, shading or a dotted line).

A confidence range for estimated prices spans a price range from the lowest price to the highest price of a range in which the results of an estimation method lead to confidence that the price is to be found. A confidence range for estimated prices may be indicated graphically using a bar. The bar may be displayed for each date in a range of dates. The bar may be displayed for each date in a range of dates for an outward journey and for a return journey. The bar may be colour-coded eg. to indicate that the bar corresponds to recent prices which are likely to be stable relative to the booking function, to price ranges derived from multiple tickets sharing a departure date, and to price ranges estimated from similar itineraries. One bar may be provided for a given date. More than one bar may be provided for a given date. An example is given in **Figure 22****.**

### B. DERIVED AVAILABILITY ENGINE

### Background / Motivation

The motivation is very similar to that in the Model Based Pricing example.

The 'scheduled' price model means that two single quotes cannot be used to create a return quote, and therefore a query has to be run for every possible date pair, and the large number of date pairs makes it prohibitive to do this due to the cost of obtaining the data and the space required to store it. The return prices, however, are the result of combining *available* fares available for the outward and inward legs, along with some rules. Thus if it is possible to know the availability and rules, it is possible to decompose a return query into 'reusable' legs that can be used to construct new 'return' prices, in a similar (but different) manner to that used for airlines with a budget price model.

### Example of Derived Availability Engine

Global Distribution Systems gather schedules from OAG (Official Airline Guide: see e.g. www.oag.com), fares from ATPCO, and fare class availability from the airlines, and store this information in their own systems. This stored information is periodically updated from those sources. When a query comes to a GDS to quote for a given route and date(s), the GDS performs the following steps:
1. Determine valid itineraries from schedules
2. Compute valid fares for the itineraries (Some GDS do not have pricing engines and use a third party engine, such as one provided by SITA (see e.g. http://www.sita.aero/), to ensure the correct price is applied for each itinerary travelled.)
3. Find the availability of those fares
4. Adding the correct taxes and surcharges

Step 1 may be achieved in routes services. Specifically, it may be achieved by using timetables and rules about what can be sold; given a user query we can identify the valid itineraries that a ticket can be bought for.

Airlines submit fares to ATPCO, and ATPCO provide subscriptions to these data, but transforming these raw fares and rules into a system for determining the correct fare for a given query would be a massive effort. Fortunately, ATPCO supply merged fare and rule data in a data feed called FROP (Fare Rule Output Product). FROP data are transmitted in a fixed-length file of records containing fare information and summarized rule conditions for key categories. Therefore Step 2 can be accomplished using the FROP data. It can also be achieved by combining fare rules and prices from airlines, using a pricing engine.

ATPCO also provide a feed of itinerary and service fee taxes. A tax and surcharge engine can be built that takes the data in these subscriptions and uses them to calculate the overall price a customer would pay for a given fare, thereby emulating Step 4.

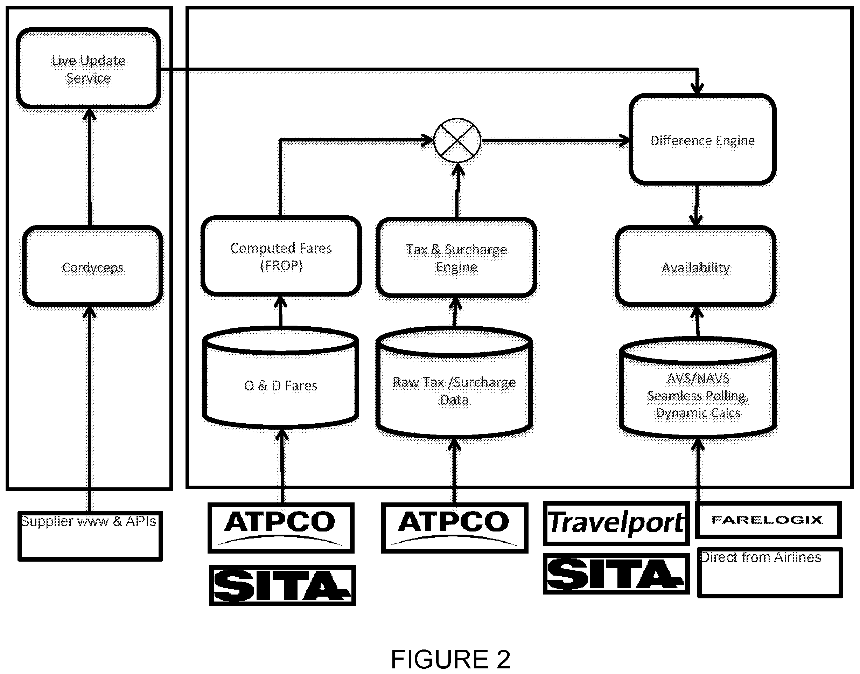

The only remaining item for low cost calculation of GDS fares is the availability - Step 3. It is possible to derive availability by comparing the result of a live update (the net result of Steps 1-4) with the calculation of Steps 1, 2, and 4 outlined above. i.e. by combining the routes service, fares from FROP and a tax and surcharge engine it is possible to compute all the possible fares, and the observed fares from a live update can be used to infer which of possible fares was used, and therefore which of the computed fares were available. The diagram in **Figure 2** shows how such a 'difference' engine can be used to derive the availability of fare classes from a live update.

If the available fares are known for both the outward and inward leg of a return flight, the return price can be calculated even if the specific pair of dates in the return has not been observed. This way of modelling quotes is known as Single Leg Combinable (SLC). SLC is similar to the 'budget' price model except that in the budget case the outward and inward legs of a return are also valid as single tickets. In the budget case constructing returns is simply a matter of adding the inward and outward leg prices (SLC construction is slightly more complex as it requires finding the valid fares for the date-pair and then applying availability).

If the price of a fare increases, while availability remains the same, the derived availability engine can be used to calculate the new price without it having even been observed.

There are additional benefits to producing this feed of derived availability compared to using a GDS. Pure calculation in a GDS does not guarantee that the fares are 'findable' on airline or OTA websites, whereas observed fares are - by definition - findable. Also, pure calculation also does not account for extra fees, mark-ups, discounts, and private fares which can be embedded in the observed fares.

Note that fare prices don't necessarily change, but there are lots of different fares for a specific flight, and the availability of each fare can change: yield management software may continuously alter what fares are available, so cheaper tickets may just disappear as yield management withdraws them to increase yield.

### Further Example of Derived Availability Engine

A derived availability engine may use fares from a centralized registry, such as ATPCO FROP, and taxes and surcharges data, to evaluate availability information (service class) for a given set of observed quotes.

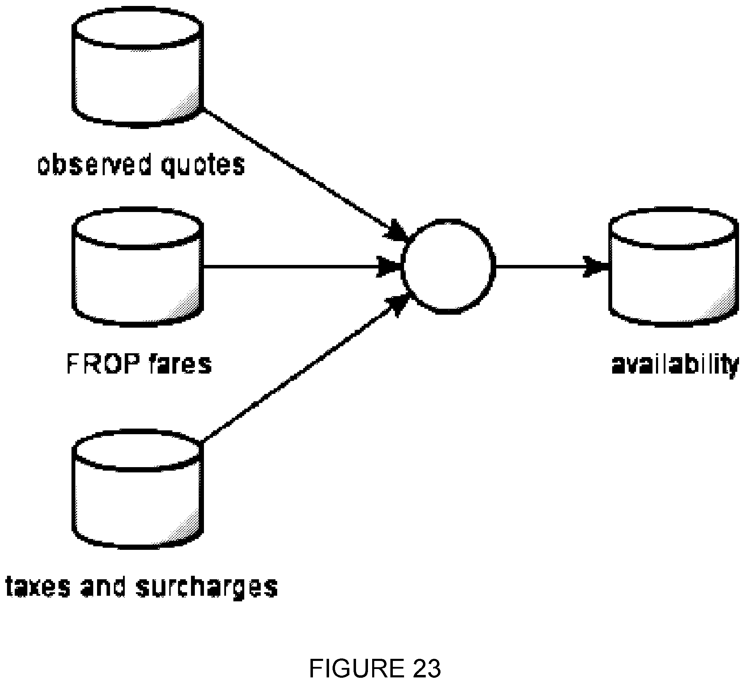

An example of main components in the system and of the flow of information is shown in **Figure 23****.**

Observed quotes can be obtained from OTAs, airline websites, APIs and other services. Each quote can contain airport-level route, airline, flight number, price (fare and / or taxed price) and other details.

An example of an authority source of fares is an ATPCO product called FROP. FROP is available for a subscription fee and contains fares in a flat, tabular format. Each FROP record contains information like city-level route, airline, service class, price and constraints describing when fares can be applied (e.g. advance purchase specification). FROP is built from data published by airlines.

Taxes and surcharges data can be obtained from public sources (e.g. airport or government websites). Data are also offered by ATPCO as a paid product, which covers government taxes, airport fees, fuel charges and majority of other components added on top of fares. A final price paid by the passenger is a sum of fare price and taxes and surcharges amounts.

With listed components we can attempt to derive availability (service class) of each observed quote by applying a process as described below.

A first step of the process is to evaluate a set of observed quotes we are interested in (e.g. by given search criteria like route, travel dates, passenger information etc.). Next we need to find FROP records matching a search query for which quotes were observed.

With both sets of prices we must reduce them to a comparable format. Next step depends on whether observations include non-taxed or taxed prices only. In the first case we can directly compare observed fares with FROP. Otherwise we need to calculate and add taxes and surcharges to all FROP fares taking into account query conditions (e.g. number of type of passengers, point of sale etc.).

With observed quotes and FROP in the same form (taxed or non-taxed) we can compare the quotes to find matching ones. We assume quotes and FROP are equivalent if they have the same price.

Depending on the form of the fares from the authority (in this case - FROP) the matching process may require additional steps like constructing return fares from multiple one-way records to match observed return quotes.

At this point a link between FROP records and observed quotes has been established. Now for each observed quote we can derive fare class availability by applying a service class from equivalent FROP records.

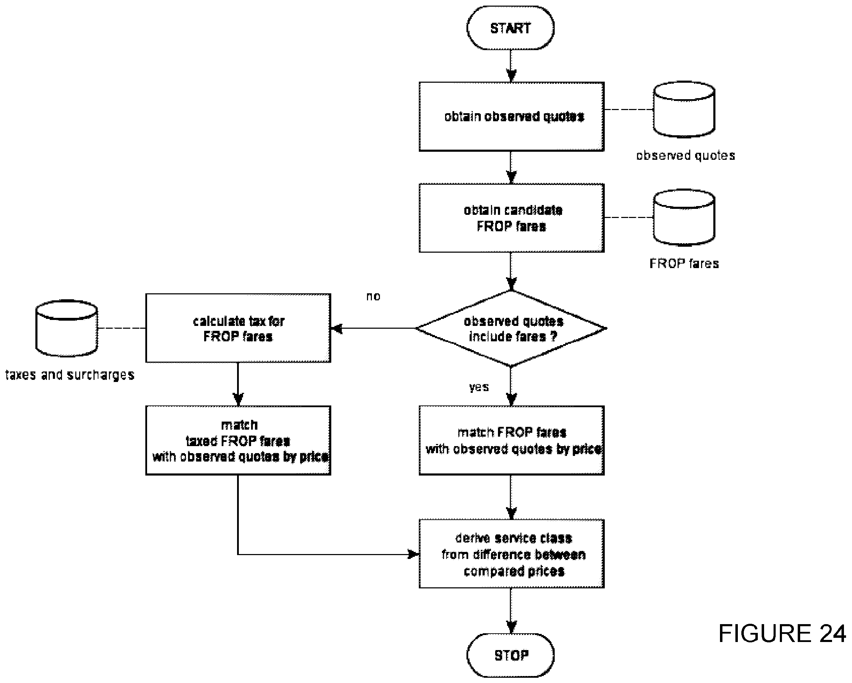

An example of a process for deriving fare class availability is shown in **Figure 24****.**

### Benefits

- Deriving availability rather than requiring queries to a GDS or airline reservation system in order to find it
- Calculation of new prices on the basis of estimated availability, rather than true availability.
- Estimation of new prices based on availability and fare rules, without having observed instances of the new prices.

### Potential Other Applications

Providing airlines with pricing of their own products, as they are also currently pricing this from the GDS at a high cost.

Companies interested in finding flight data prices, at a considerably reduced cost.

### ARCHITECTURE OVERVIEW EXAMPLE

There is provided a server (which may be real or virtual) from which estimation services for fare availability and price are provided. A related website, smartphone apps, business-to-business services, connections with traditional airlines (eg. British Airways, Qantas, KLM etc.), connections with budget airlines (eg. RyanAir, easyJet, germanwings etc.) and travel booking websites (eg. lastminute.com, opodo, Thomson etc.) may be provided.

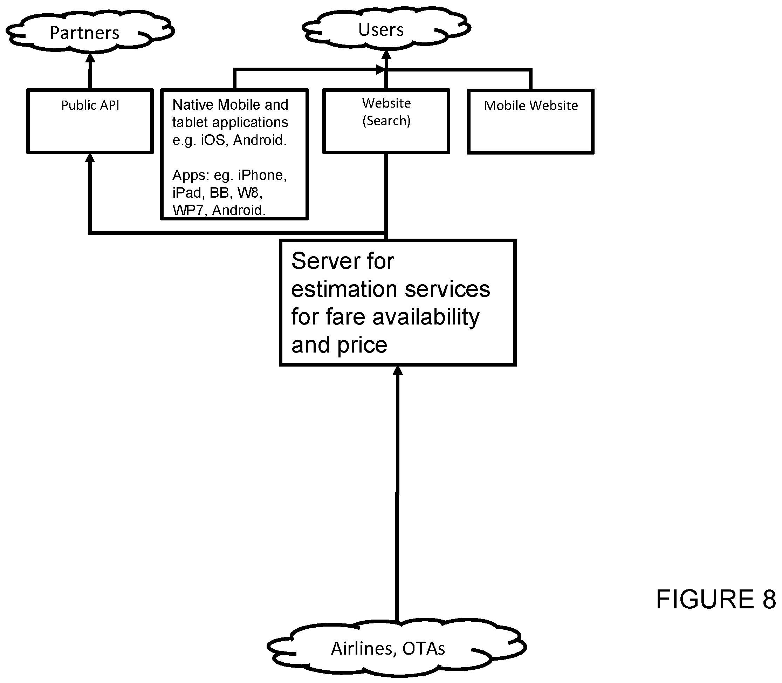

Travel booking websites and airlines may provide input data for the server from which estimation services for fare availability and price are provided. Output may be provided by the server to a public application programming interface (API) e.g. to partner companies. Output may be provided by the server to a website for searching, to a mobile website for searching, and to apps on smartphones, for users. An example connection configuration between the server and input data sources, and output to partners and to users, is shown in **Figure 8****.**

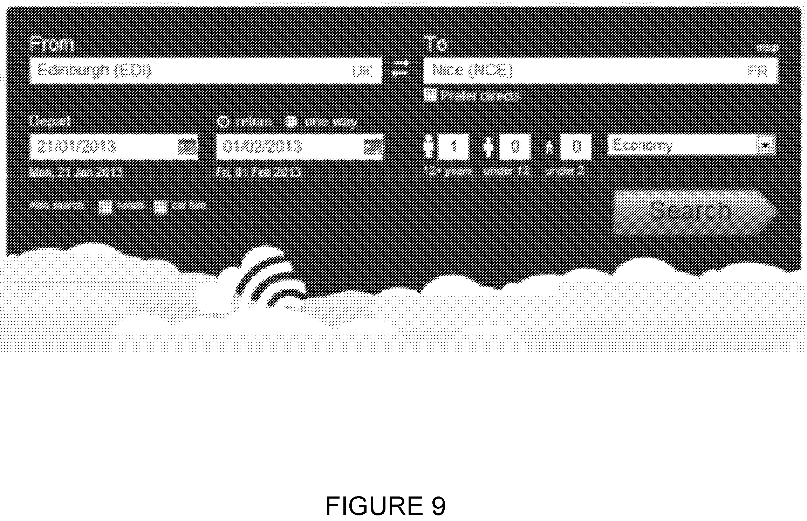

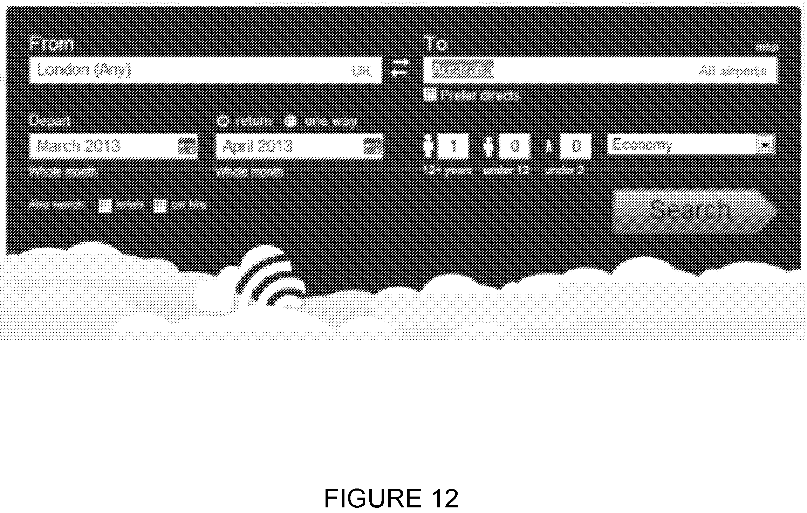

In a search at the server, a user may specify a start location (which could be an individual airport, a city including a plurality of airports, or a country including a plurality of airports, for example). In a search at the server, a user may specify a destination location (which could be an individual airport, a city including a plurality of airports, or a country including a plurality of airports, for example). In a search at the server, a user may specify a departure date or a range of departure dates (which could be a date range, or a calendar month, or an unspecified date which could imply a date range such as any date in the coming year, for example). In a search at the server, a user may specify a return date or a range of return dates (which could be a date range, or a calendar month, or an unspecified date which could imply a date range such as any date in the coming year, for example). In a search at the server, a user may specify a one way ticket or a return ticket. A user may specify the number of passengers in specific age ranges. A user may specify a class of ticket (eg. economy, premium economy, business class or first class, for example). A parallel search for hotels may be performed. A parallel search for car hire may be performed. A preference for direct flights may be indicated. An example user interface is shown in **Figure 9****.** A further example user interface is shown in **Figure 12****,** which is an example of a flexible search, because the departure indicates the airport used in London (UK) may be any, and the destination indicates that any airport in Australia is permitted.

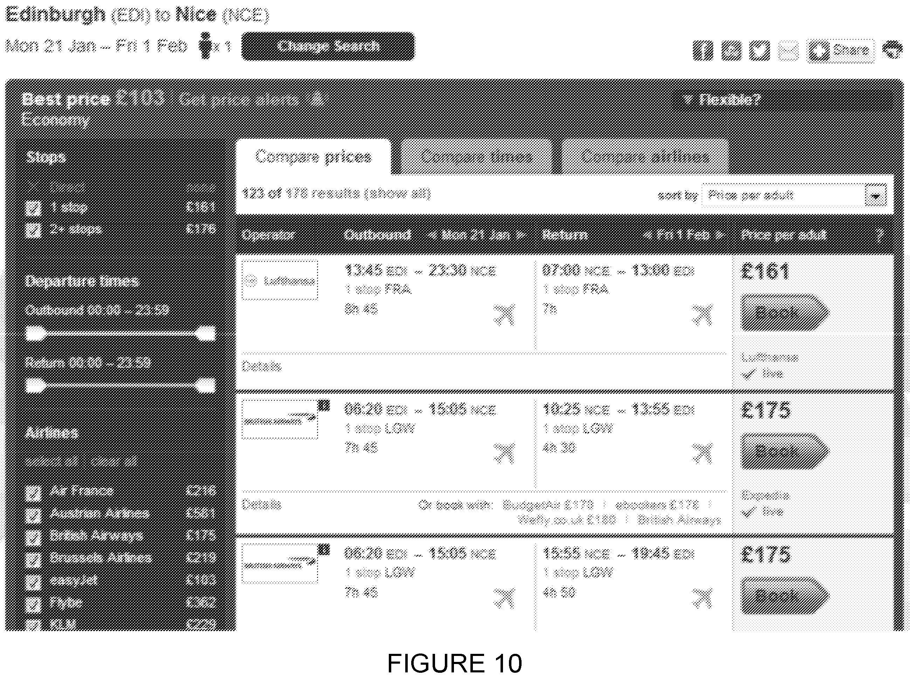

Output search results may include a list of flights which satisfy the search criteria. A graphical indicator (eg. a slider bar) may be provided to limit the outbound flight departure time range. A graphical indicator (eg. a slider bar) may be provided to limit the return flight departure time range. A selectable tab may be provided such that flights may be arranged in order of increasing cost. A selectable tab may be provided such that flights may be arranged in order of increasing travel time. A selectable tab may be provided such that flights may be arranged in order of airline name in alphabetical order. An example user interface is shown in **Figure 10****.**

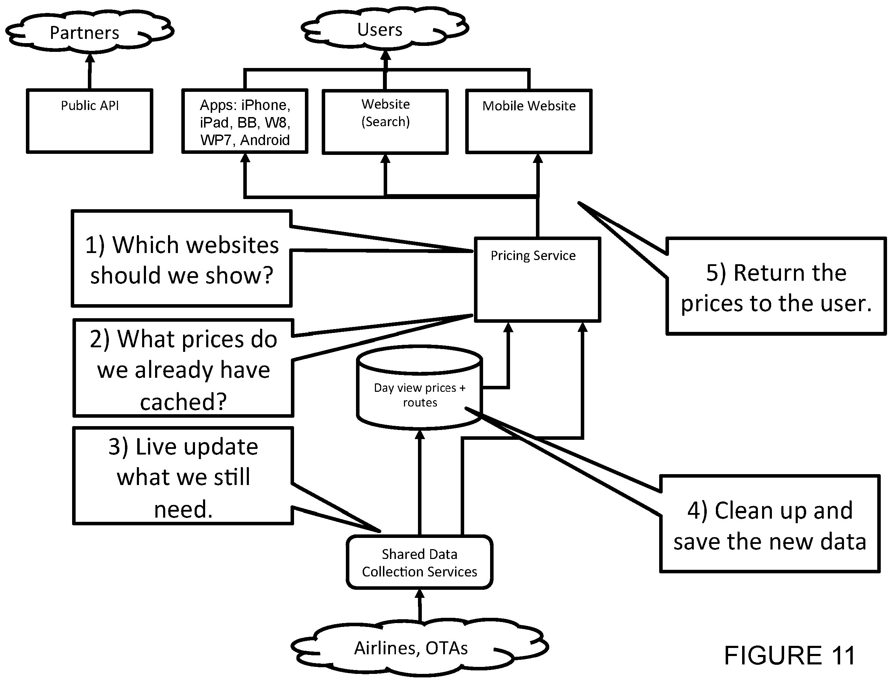

In an example search by a user, a flight between a start and a destination is requested (which may be a one way or a return flight), for an outbound flight date, and a return flight date if relevant. In an example search process, in a first step, partner search websites from which to show output are selected. In a second step, relevant prices that are already cached are identified. In a third step, relevant prices that are not available are identified and updated. In a fourth step, the new data is cleaned up and saved (for example, taxes and fees may be stripped out, and who the real flight operator is may be identified). In a fifth step, prices are returned to a user. An example of a system for performing a search process is shown in **Figure 11****.**

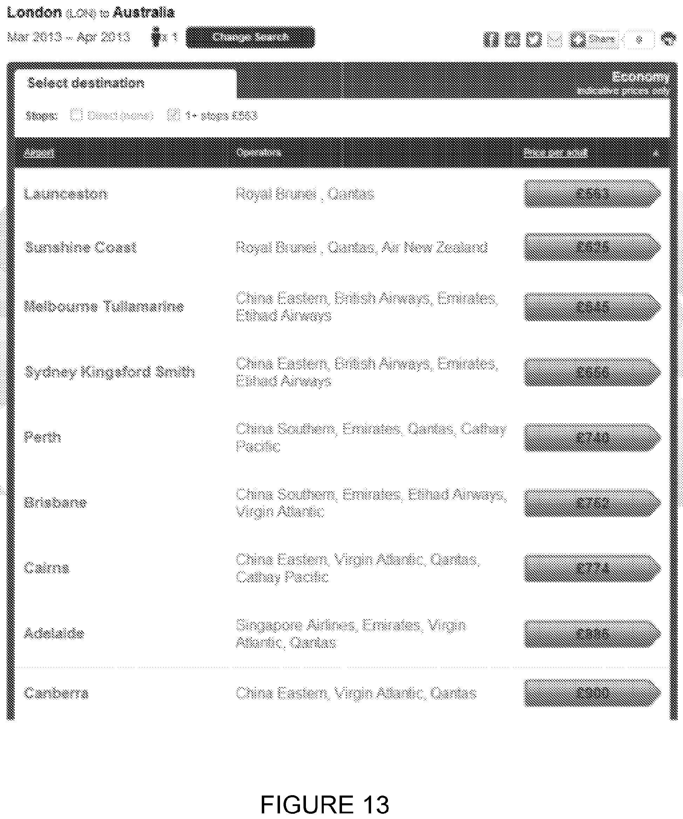

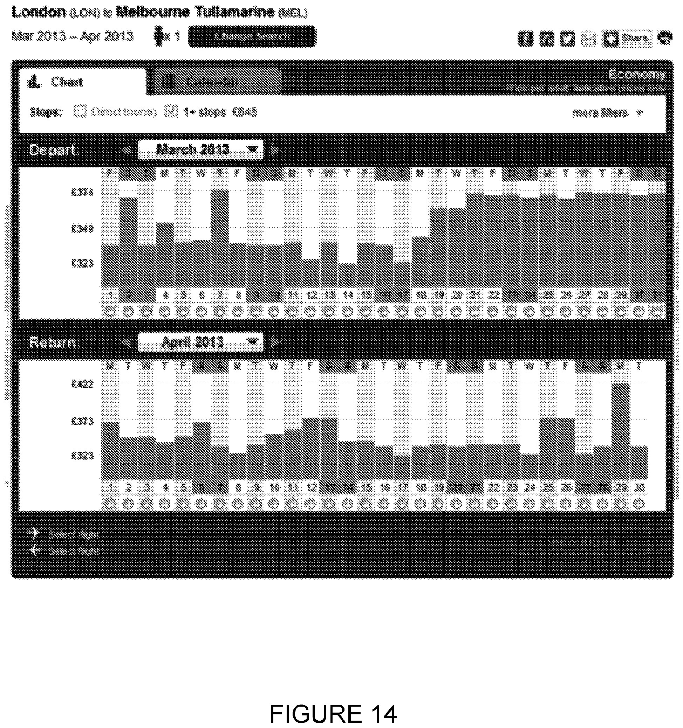

In a flexible search, output data may provide a list of destination airports which satisfy a flexible search criterion (eg. destination is any airport in Australia, starting from any airport in London, UK), which may be listed in ascending order of price. An example of user interface output is shown in **Figure 13****.** Upon selection of a particular airport, a minimum price for an outward leg of the journey may be presented as a function of outward departure date eg. for a selectable calendar month, and a minimum price for a return leg of the journey may be presented as a function of return departure date eg. for a selectable calendar month, for selected start and destination cities or airports. An example of user interface output is shown in **Figure 14****.**

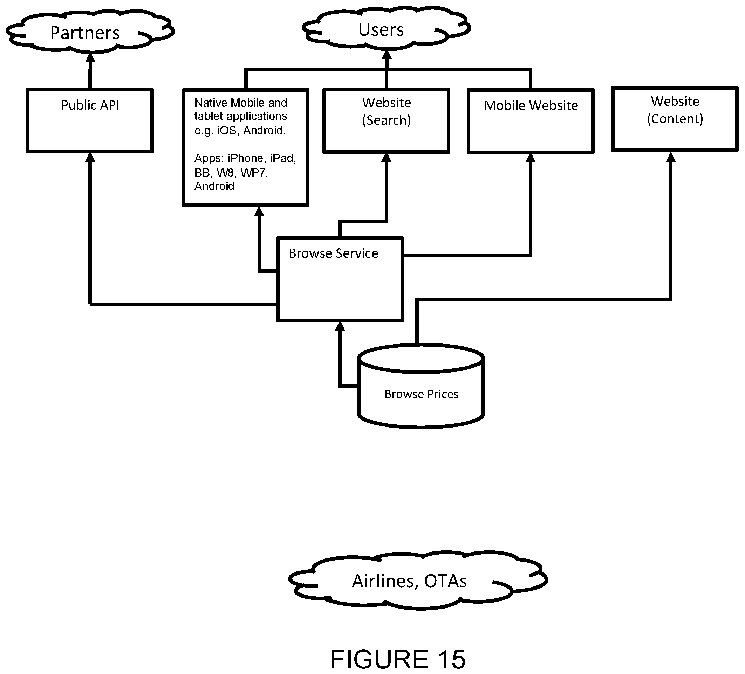

Browse searches may be provided. A browse service may be provided to users of smartphone apps or to users of a search website. The browse service may access browsed prices data. Browsed price data may include data that has been scraped from website content. The browse service may be connected to a public application programming interface (API). The browse service might not be connected to airline servers or to the servers of other travel information service providers. An example of an architecture for browse searches is shown in **Figure 15****.**

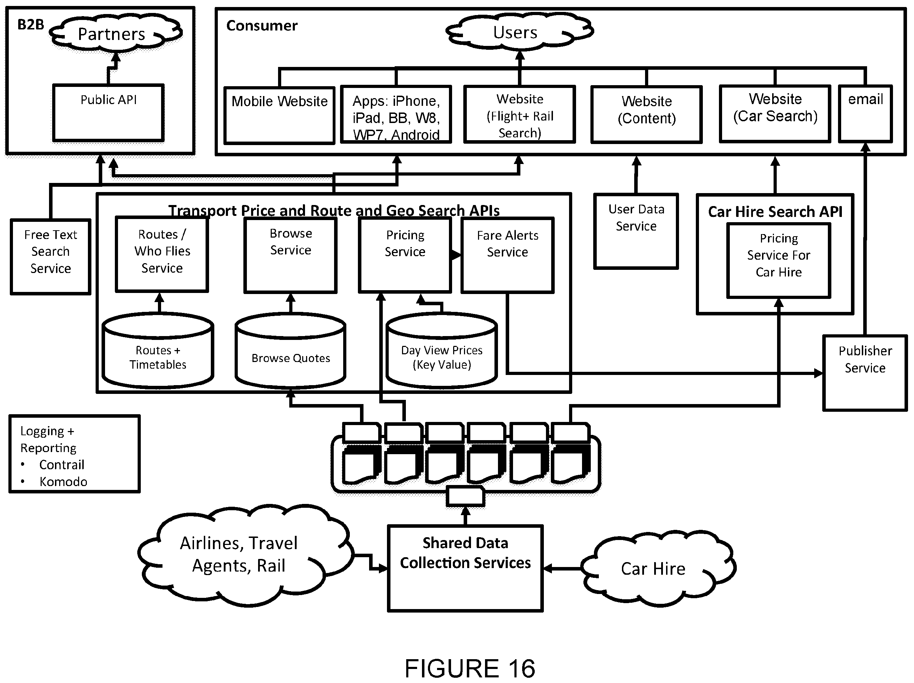

An example of an overall system architecture for a system which includes provision of estimation services for fare availability and price is shown in **Figure 16****.**

The following section provides background information on how airfares are calculated and the role of the GDS.

### C. INTRODUCTION TO GLOBAL DISTRIBUTION SYSTEMS

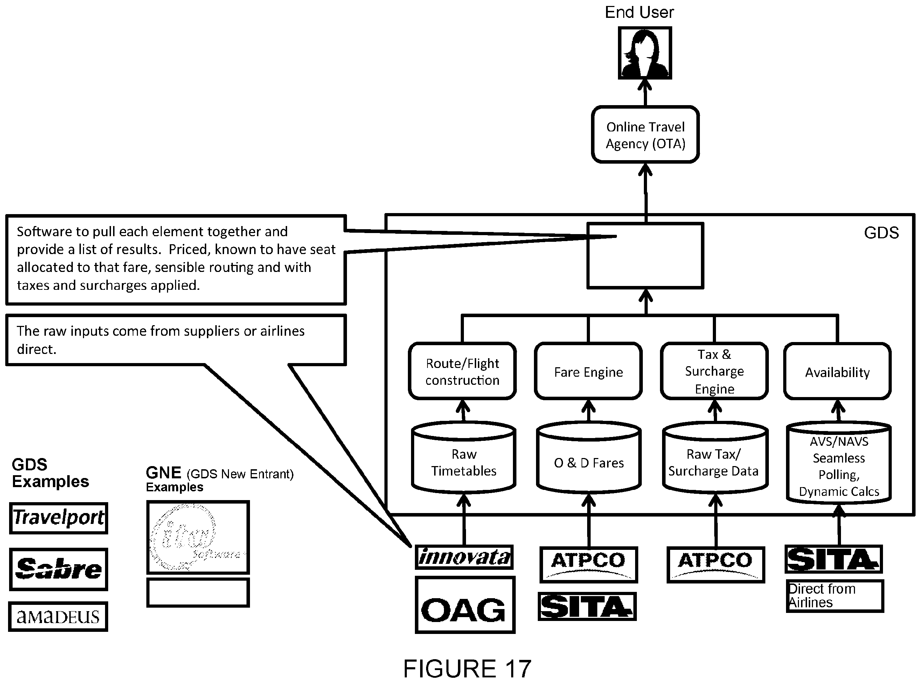

A Global Distribution System (GDS) may be defined as a system containing availability, prices, and related services for Airlines and through which reservations can be made and tickets issued. The GDS makes these functions available to subscribing travel agents, booking engines, airlines and to other subscribers. An example GDS configuration is shown in **Figure 17****.** A more general term is a "Distribution System", which may include the ability to make reservations for modes of transport other than air transport, for example, e.g. trains.

### Route Explorer

Historically, GDSs have added exploring routes as airline networks grew. As the number of potential and possible connections increased exponentially (SOF - NYC has a large number of connection points, e.g. SOF - IST - NYC, SOF - FRA - NYC, SOF - MOW - CPH - NYC, etc), GDSs added this layer of 'connection' building to reduce the number of different priceable routes, so that they do not have to process that many fares and rules. They did that in a very blunt manner - static route and connection tables, which will tell them that to fly between zones (defined by ATPCO - US - EUR, EUR - APAC for the simplicity of argument), in essence including in the route explorer cities between SOF - NYC, potentially a couple in the wrong direction (such as IST), but dismissing a great number of cities as a possible connection - e.g. a flight SOF - PRG - CPH - NYC might be considered too complex and potentially expensive, so it is dropped at the route explorer stage.

### Connection Building

After the routings are established, the connection building starts looking into carriers, flight numbers, and connection restrictions, which are included in the Minimum Connect Time (MCT) tables. The MCT, distributed by OAG, is a complex document which specifies general rules how flights/carriers can connect in terms of time e.g. IF long-haul US - EU connect at LHR to a EU - EU, apply 120 min MCT. The general rules are easy to interpret, but are important - a manual override is needed if someone wants to place a booking outside the MCT parameters.

Where it gets interesting is the MCT exceptions - about 200,000 or so, which can go down to IF DL flight #003 connect to an AF flight #004, then require 55 min. However, if DL flight #003 arrives at CDG at Gate 19 and connect flight AF009 departs from Gate 49, then apply an MCT of 65 min, etc. About 70,000 of all exceptions are for Air France (AF) and Paris Charles De Gaulle airport (CDG) - that's why many passengers consider it the worst to fly through.

### Fares

An example of a fare is a pricing contract, which specifies a price (base fare) for a service provided by the carrier, defined by service class, class type (Y, Q, J, M, H, etc) and type of trip (one-way, round-trip, multi-city, round-the-world (RTW)).

In an example, each fare comes with an attached number of rules and restrictions that apply to it - think of a fare as a contract that is 20-30 pages long, rather than just an excel raw (a spreadsheet or CSV file). So rather than thinking of a fare as a row in a big excel spreadsheet with columns indicating which features a fare has, instead one should think of a fare as a complex thing in its own right with many parameters and restrictions and therefore rather more like a contract. The fare defines who, when, and how one can use the fare - passenger type, when the fare is applicable (NVB, NVA - not valid before, not valid after) and a whole lot of other restrictions. A fare could be a public fare (accessible to every reseller) or a private fare (accessible to specified reseller/seller).

Fares are provided by carriers; they are defined at a general level to a market, and are limited by travel and ticketing dates. Naturally, a fare represents a price point.

### Fare Upload and Distribution

ATPCO is an industry body that handles the fares and fares distribution in the industry. There's a small number of carriers which distribute only to SITA (Bulgaria Air is an example).

### Scheduling

Previously, ATPCO would release the fares on a specific schedule, but per carrier request, the organization started releasing the fares hourly. This allows airlines to ensure quick reaction to market changes that are not suitable only for availability controls.

SITA releases its fares 4 times a day on the weekdays and 3 times over the weekend. There are also fares that live in the GDS (GDS-specific fares, or negos) - these fares are entirely under the control of the GDSs and do not follow a general distribution schedule.

### Fare Rules and Restrictions and Categories

Fare data, fare class data, and fare restriction data are provided.

### How does pricing work (very high level)?

Rules are calculated by a pricing engine in a very strict order of rule records, tables, and sub-tables. If no specific rule records are found, then there is a General Rule that governs them all.

Restriction Data:
- Fare Class tells engines that there is a rule for a specific fare
- Category Control tells engines what types of restrictions exist
- Category Data tables are last, when the engines read to get the relevant information

For example, fare class tells engines there is a rule attached, which is Category 15 (Sales restrictions), which, after digging into the Category Data Tables pulls additional information on it - what type, what are the rules and restrictions.

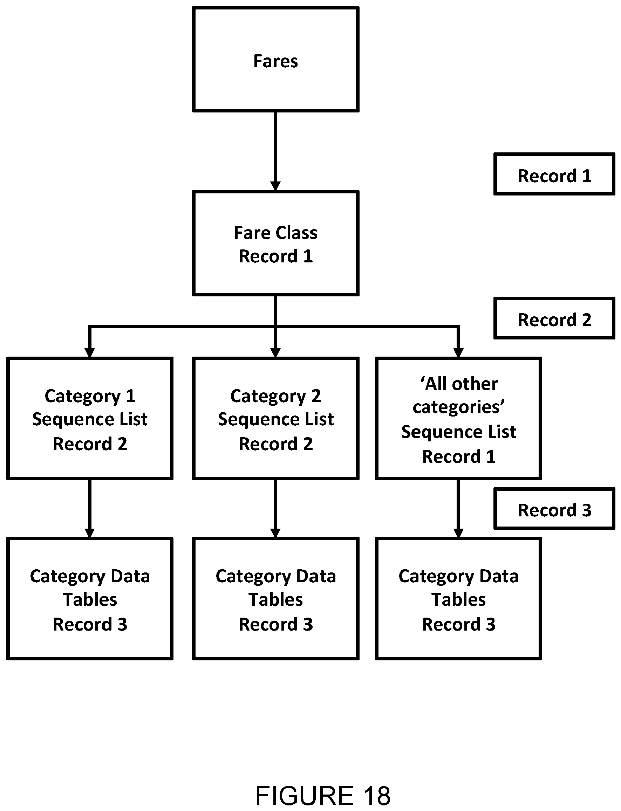

An example of fares regarding a fare class record, fare categories, and category data tables, is shown in **Figure 18****.**

### Fare Display vs. Fare Quote and Process

A lot of industry professionals use the terms Fare Display and Fare Quote interchangeably, which for experts is not acceptable. Let us explain that:

### Fare Display:

A comprehensive, consolidated picture of the market fares and related rules. This allows agents to:
- Compare fare rules (N.B! not prices)
- Communicate contract terms (fare rules) to passengers

### Fare Quote:

A final price, after contract terms have been applied. It captures pretty much what we would like to give to the passenger:
- All taxes
- All surcharges
- All regulations related to it
- Final Price

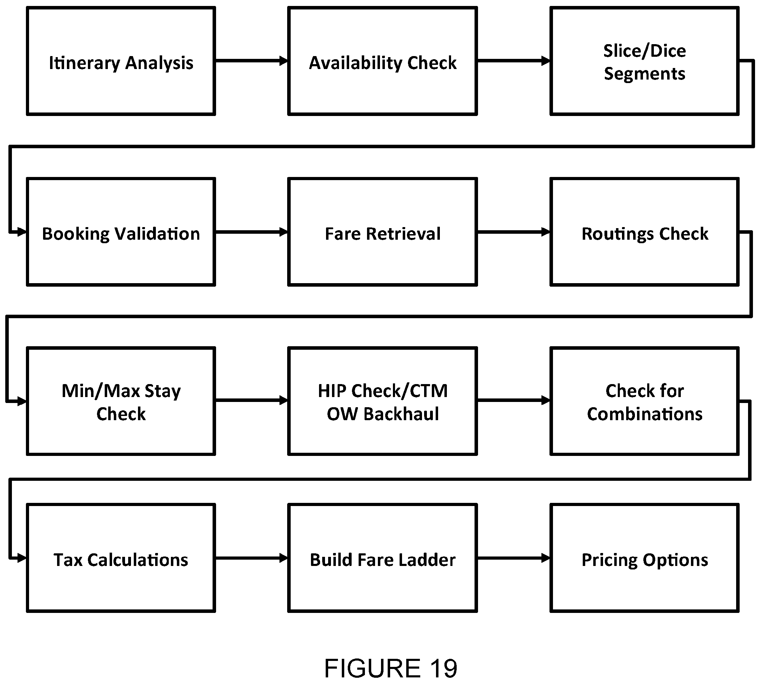

An example of a process which provides fare pricing options is shown in **Figure 19****.**

### Availability

Availability knowledge is very important in the industry. Availability allows airlines to control their inventory (seats) and it adds another way to manage how profitable a route is by opening up and closing availability buckets, which is managed by revenue management systems (RM).

While certain RMs have great functionality to manage complex rules, most of the availability rules are created by internal departments of statisticians and mathematicians, so the complexity is high.

There are three main ways to receive availability, if you want to check whether a certain seat/class of service is available.

### i) NAVS/AVS

NAVS = simple, numeric availability per seat class.
Example: Y9 H3 M0 L8....
AVS = availability status - is the flight open/closed, open for waitlist, etc.

### ii) Polling

CXR (a carrier) could use NAVS/AVS only as an indication, if a better connection goes down. These CXR use revenue management rules and they need to be polled for real availability and all availability information.

Some airlines and/or flights require to be polled and the instruction for it is MR (market restrictions). When a GDS asks for AVA, if the tag is MR, then the GDS needs to poll for the right availability. Unfortunately, NAVS/AVS do not show these tags, so if a GDS uses NAVS/AVS for a tagged flight, they might display the wrong availability.

### iii) Cache DB

In order to reduce polling and NAVS/AVS, pricing engines have developed complex cache DBs. These are not accurate, even though as they store info, they kind of achieve their goal of reduced calls.

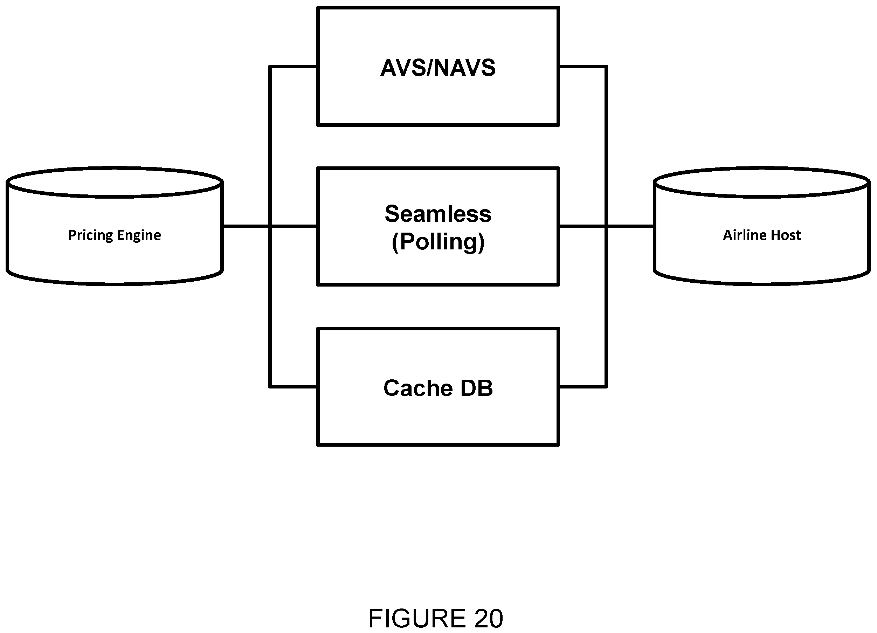

An example of a relationship between a pricing engine, AVS/NAVS, Seamless (polling), a cache DB and an airline host is shown in **Figure 20****.**

### Availability Server Example

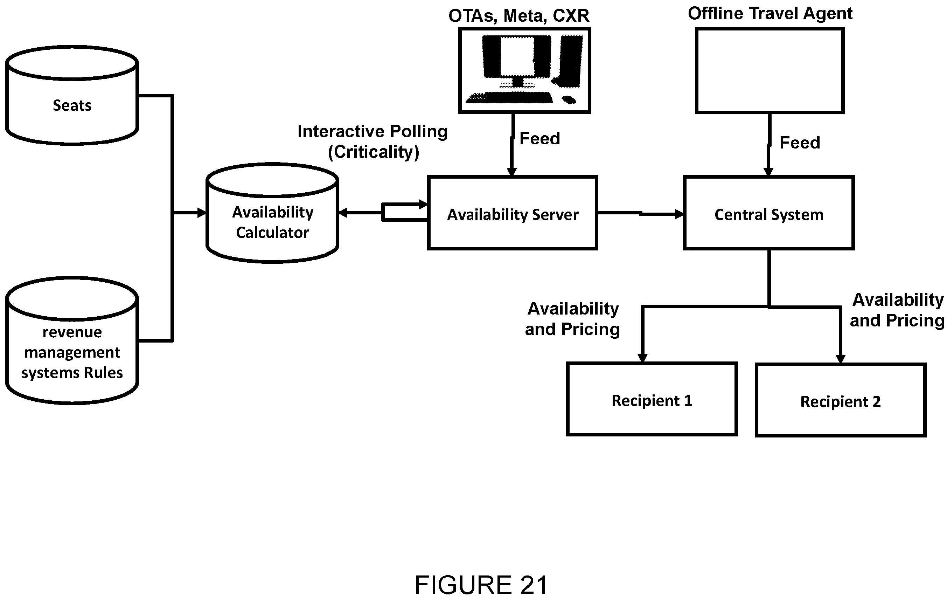

A caching mechanism may be fed by offline traffic, but used by an online channel. An Availability Server may have the capability to update cached data based on rules (interactive polling) and flag any inconsistencies for booking. An example system including an Availability Server is shown in **Figure 21****.**

### Note

The above-described steps can be implemented using standard well-known programming techniques. The novelty of the above-described embodiment lies not in the specific programming techniques but includes the use of the steps described to achieve the described results. Software programming code which embodies or forms part of the present invention is typically stored in permanent, non-transitory storage. In a client/server environment, such software programming code may be stored with storage associated with a server. The software programming code may be embodied on any of a variety of known media for use with a data processing system, such as a diskette, or hard drive, or CD ROM. The code may be distributed on such media, or may be distributed to users from the memory or storage of one computer system over a network of some type to other computer systems for use by users of such other systems. The techniques and methods for embodying software program code on physical media and/or distributing software code via networks are well known and will not be further discussed herein.

It will be understood that each element of the illustrations, and combinations of elements in the illustrations, can be implemented by general and/or special purpose hardware-based systems that perform the specified functions or steps, or by combinations of general and/or special-purpose hardware and computer instructions.

These program instructions may be provided to a processor to produce a machine, such that the instructions that execute on the processor create means for implementing the functions specified in the illustrations. The computer program instructions may be executed by a processor to cause a series of operational steps to be performed by the processor to produce a computer-implemented process such that the instructions that execute on the processor provide steps for implementing the functions specified in the illustrations. Accordingly, the Figures support combinations of means for performing the specified functions, combinations of steps for performing the specified functions, and program instruction means for performing the specified functions.

It is to be understood that the above-referenced arrangements are only illustrative of the application for the principles of the present invention. Numerous modifications and alternative arrangements can be devised without departing from the spirit and scope of the present invention. While the present invention has been shown in the drawings and fully described above with particularity and detail in connection with what is presently deemed to be the most practical and preferred example(s) of the invention, it will be apparent to those of ordinary skill in the art that numerous modifications can be made without departing from the principles and concepts of the invention as set forth herein.

## Claims

1. A computer-implemented method of inferring, from a Distribution System server response, which airfare classes are available, the method including the steps of:
(i) a computer server receiving a request for an airfare price, together with parameters defining the airfare,
(ii) configuring one or more processors to determine estimated prices from an incomplete historical price dataset by analysing patterns in that dataset, at any time with respect to step (i) above, wherein this step comprises:
(a) obtaining historical price quotes from a computer data store;
(b) grouping the historical price quotes by category;
(c) deriving statistics for each group;
(d) storing on a computer for each group a classifier including the derived statistics, and
(e) identifying groups with stored classifiers to which the requested price corresponds;
(iii) configuring one or more processors to calculate estimates for the requested airfare price that satisfy the parameters, and calculating a set of estimates for the requested airfare price that satisfy the parameters over a specified date range using statistics from the stored classifiers corresponding to the identified groups;
(iv) sending the request to a Distribution System server for airfare prices;
(v) receiving from the Distribution System server the Distribution System server's airfare prices;
(vi) comparing the calculated set of estimates for the requested airfare price from step
(iii) with the Distribution System server's airfare prices received in step (v) so as to infer an airfare class availability of the Distribution System server, and
(vii) the computer server providing the inferred airfare class availability of the Distribution System server to a computing device.

2. The method of Claim 1, wherein determination of estimated prices is performed by inferring, deriving or predicting estimated prices.

3. The method of any of Claims 1 to 2, 4,- wherein the Distribution System server is a Global Distribution System server.

4. The method of any of Claims 1 to 3, wherein an inferred airfare class price is included with each inferred airfare class availability.

5. The method of any of Claims 1 to 4, wherein step (vii) includes sending the inferred airfare class availability to a server.

6. The method of any of Claims 1 to 5, wherein step (ii) includes using rules in order to analyse patterns in the dataset.

7. The method of any of Claims 1 to 6, wherein step (ii) includes a naive Bayes classifier machine learning approach which produces a probabilistic model of prices, and that model is used to predict unobserved prices.

8. Method of any of Claims 1 to 7, wherein step (ii) includes building a statistical model from historical prices, identifying missing quote candidates, and pricing quote candidates based on the statistical model.

9. The method of any of Claims 1 to 8, the method including the step of: including cached airfare prices in the set of price estimates.

10. An inferring server configured to infer from a Distribution System server which airfare classes are available, the inferring server configured to:
(i) receive a request for an airfare price, together with parameters defining the airfare,
(ii) configure one or more processors to determine estimated prices from an incomplete historical price dataset by analysing patterns in that dataset, at any time with respect to (i) above, wherein the configuring comprises:
(a) obtaining historical price quotes from a computer data store;
(b) grouping the historical price quotes by category;
(c) deriving statistics for each group;
(d) storing on a computer for each group a classifier including the derived statistics, and
(e) identifying groups with stored classifiers to which the requested price corresponds;
(iii) configure one or more processors to calculate estimates for the requested airfare price that satisfy the parameters, and calculate a set of estimates for the requested airfare price that satisfy the parameters over a specified date range using statistics from the stored classifiers corresponding to the identified groups;
(iv) send the request to a Distribution System server for airfare prices;
(v) receive from the Distribution System server the Distribution System server's airfare prices;
(vi) compare the calculated set of estimates for the requested airfare price from (iii) with the Distribution System server's airfare prices received in (v) so as to infer an airfare class availability of the Distribution System server, and
(vii) provide the inferred airfare class availability of the Distribution System server to a computing device.

11. Computer program product embodied on a non-transient storage medium, the computer program product when running on a computer arranged to infer from a Distribution System server which airfare classes are available, the computer program product when running on a computer arranged to:
(i) receive a request for an airfare price, together with parameters defining the airfare,
(ii) configure one or more processors to determine estimated prices from an incomplete historical price dataset by analysing patterns in that dataset, at any time with respect to (i) above, including
(a) obtaining historical price quotes from a computer data store;
(b) grouping the historical price quotes by category;
(c) deriving statistics for each group;
(d) storing on a computer for each group a classifier including the derived statistics, and
(e) identifying groups with stored classifiers to which the requested price corresponds;
(iii) configure one or more processors to calculate a set of estimates for the requested airfare price that satisfy the parameters, and calculate estimates for the requested airfare price that satisfy the parameters over a specified date range using statistics from the stored classifiers corresponding to the identified groups;
(iv) send the request to a Distribution System server for airfare prices;
(v) receive from the Distribution System server the Distribution System server's airfare prices;
(vi) compare the calculated set of estimates for the requested airfare price from (iii) with the Distribution System server's airfare prices received in (v) so as to infer an airfare class availability of the Distribution System server, and
(vii) provide the inferred airfare class availability of the Distribution System server to a computing device.

## Patentansprüche

1. Computerimplementiertes Verfahren zum Inferieren, aus einer Distributionssystemserverantwort, welche Flugpreisklassen verfügbar sind, wobei das Verfahren die folgenden Schritte beinhaltet:
(i) Empfangen, durch einen Computerserver, einer Anfrage für einen Flugpreis, zusammen mit Parametern, die den Flugpreis definieren,
(ii) Konfigurieren eines oder mehrerer Prozessoren dazu, geschätzte Preise aus einem unvollständigen historischen Preisdatensatz durch Analysieren von Mustern in dem Datensatz zu bestimmen, zu jeder Zeit in Bezug auf Schritt (i) oben, wobei dieser Schritt Folgendes umfasst:
(a) Erlangen historischer Preisangebote aus einem Computerdatenspeicher;
(b) Gruppieren der historischen Preisangebote nach Kategorie;
(c) Ableiten von Statistiken für jede Gruppe;
(d) Speichern, auf einem Computer, für jede Gruppe, eines Klassifikators, der die abgeleiteten Statistiken beinhaltet, und
(e) Identifizieren von Gruppen mit gespeicherten Klassifikatoren, denen der angefragte Preis entspricht;
(iii) Konfigurieren eines oder mehrerer Prozessoren dazu, Schätzungen für den angefragten Flugpreis, die die Parameter erfüllen, zu berechnen, und Berechnen eines Satzes von Schätzungen für den angefragten Flugpreis, die die Parameter erfüllen, über einen angegeben Datumsbereich unter Verwendung von Statistiken aus den gespeicherten Klassifikatoren, die den identifizierten Gruppen entsprechen;
(iv) Senden der Anfrage an einen Distributionssystemserver für Flugpreise;
(v) Empfangen, von dem Distributionssystemserver, der Flugpreise des Distributionssystemservers;
(vi) Vergleichen des berechneten Satzes von Schätzungen für den angefragten Flugpreis aus Schritt (iii) mit den Flugpreisen des Distributionssystemservers, die in Schritt (v) empfangen wurden, um eine Flugpreisklassenverfügbarkeit auf dem Distributionssystemserver zu inferieren, und
(vii) Bereitstellen, durch den Computerserver, der inferierten Flugpreisklassenverfügbarkeit des Distributionssystemservers an eine Rechenvorrichtung.

2. Verfahren nach Anspruch 1, wobei die Bestimmung geschätzter Preise durch Inferieren, Ableiten oder Vorhersagen geschätzter Preise durchgeführt wird.

3. Verfahren nach einem der Ansprüche 1 bis 2, wobei der Distributionssystemserver ein globaler Distributionssystemserver ist.

4. Verfahren nach einem der Ansprüche 1 bis 3, wobei ein inferierter Flugpreisklassenpreis in jeder inferierten Flugpreisklassenverfügbarkeit beinhaltet ist.

5. Verfahren nach einem der Ansprüche 1 bis 4, wobei Schritt (vii) Senden der inferierten Flugpreisklassenverfügbarkeit an einen Server beinhaltet.

6. Verfahren nach einem der Ansprüche 1 bis 5, wobei Schritt (ii) Verwenden von Regeln, um Muster in dem Datensatz zu analysieren, beinhaltet.

7. Verfahren nach einem der Ansprüche 1 bis 6, wobei Schritt (ii) einen Ansatz zum maschinellen Lernen mit naiven Bayes-Klassifikatoren beinhaltet, der ein probabilistisches Preismodell produziert, und wobei das Modell dazu verwendet wird, unbeobachtete Preise vorherzusagen.

8. Verfahren nach einem der Ansprüche 1 bis 7, wobei Schritt (ii) Aufbauen eines statistischen Modells aus historischen Preisen, Identifizieren fehlender Angebotskandidaten und Bepreisen von Angebotskandidaten basierend auf dem statistischen Modell beinhaltet.

9. Verfahren nach einem der Ansprüche 1 bis 8, wobei das Verfahren den folgenden Schritt beinhaltet: Einbeziehen zwischengespeicherter Flugpreise in den Satz von Preisschätzungen.

10. Inferierungsserver, der dazu konfiguriert ist, aus einem Distributionssystemserver zu inferieren, welche Flugpreisklassen verfügbar sind, wobei der Inferierungsserver zu Folgendem konfiguriert ist:
(i) Empfangen einer Anfrage für einen Flugpreis, zusammen mit Parametern, die den Flugpreis definieren,
(ii) Konfigurieren eines oder mehrerer Prozessoren dazu, geschätzte Preise aus einem unvollständigen historischen Preisdatensatz durch Analysieren von Mustern in dem Datensatz zu bestimmen, zu jeder Zeit in Bezug auf (i) oben, wobei das Konfigurieren Folgendes umfasst:
(a) Erlangen historischer Preisangebote aus einem Computerdatenspeicher;
(b) Gruppieren der historischen Preisangebote nach Kategorie;
(c) Ableiten von Statistiken für jede Gruppe;
(d) Speichern, auf einem Computer, für jede Gruppe, eines Klassifikators, der die abgeleiteten Statistiken beinhaltet, und
(e) Identifizieren von Gruppen mit gespeicherten Klassifikatoren, denen der angefragte Preis entspricht;
(iii) Konfigurieren eines oder mehrerer Prozessoren dazu, Schätzungen für den angefragten Flugpreis, der die Parameter erfüllt, zu berechnen, und Berechnen eines Satzes von Schätzungen für den angefragten Flugpreis, die die Parameter erfüllen, über einen angegeben Datumsbereich unter Verwendung von Statistiken aus den gespeicherten Klassifikatoren, die den identifizierten Gruppen entsprechen;
(iv) Senden der Anfrage an einen Distributionssystemserver für Flugpreise;
(v) Empfangen, von dem Distributionssystemserver, der Flugpreise des Distributionssystemservers;
(vi) Vergleichen des berechneten Satzes von Schätzungen für den angefragten Flugpreis aus (iii) mit den Flugpreisen des Distributionssystemservers, die in (v) empfangen wurden, um eine Flugpreisklassenverfügbarkeit auf dem Distributionssystemserver zu inferieren, und
(vii) Bereitstellen der inferierten Flugpreisklassenverfügbarkeit des Distributionssystemservers an eine Rechenvorrichtung.

11. Computerprogrammprodukt, das auf einem nichtflüchtigen Speichermedium verkörpert ist, wobei das Computerprogrammprodukt, wenn es auf einem Computer läuft, dazu angeordnet ist, aus einem Distributionssystemserver zu inferieren, welche Flugpreisklassen verfügbar sind, wobei das Computerprogrammprodukt, wenn es auf einem Computer läuft, zu Folgendem angeordnet ist:
(i) Empfangen einer Anfrage für einen Flugpreis, zusammen mit Parametern, die den Flugpreis definieren,
(ii) Konfigurieren eines oder mehrerer Prozessoren dazu, geschätzte Preise aus einem unvollständigen historischen Preisdatensatz durch Analysieren von Mustern in dem Datensatz zu bestimmen, zu jeder Zeit in Bezug auf (i) oben, beinhaltend:
(a) Erlangen historischer Preisangebote aus einem Computerdatenspeicher;
(b) Gruppieren der historischen Preisangebote nach Kategorie;
(c) Ableiten von Statistiken für jede Gruppe;
(d) Speichern, auf einem Computer, für jede Gruppe, eines Klassifikators, der die abgeleiteten Statistiken beinhaltet, und
(e) Identifizieren von Gruppen mit gespeicherten Klassifikatoren, denen der angefragte Preis entspricht;
(iii) Konfigurieren eines oder mehrerer Prozessoren dazu, einen Satz von Schätzungen für den angefragten Flugpreis, die die Parameter erfüllen, zu berechnen, und Berechnen von Schätzungen für den angefragten Flugpreis, die die Parameter erfüllen, über einen angegeben Datumsbereich unter Verwendung von Statistiken aus den gespeicherten Klassifikatoren, die den identifizierten Gruppen entsprechen;
(iv) Senden der Anfrage an einen Distributionssystemserver für Flugpreise;
(v) Empfangen, von dem Distributionssystemserver, der Flugpreise des Distributionssystemservers;
(vi) Vergleichen des berechneten Satzes von Schätzungen für den angefragten Flugpreis aus (iii) mit den Flugpreisen des Distributionssystemservers, die in (v) empfangen wurden, um eine Flugpreisklassenverfügbarkeit auf dem Distributionssystemserver zu inferieren, und
(vii) Bereitstellen der inferierten Flugpreisklassenverfügbarkeit des Distributionssystemservers an eine Rechenvorrichtung.

## Revendications

1. Procédé mis en œuvre par ordinateur pour déduire, à partir d'une réponse de serveur de système de distribution, quelles classes de tarifs aériens sont disponibles, le procédé comprenant les étapes consistant à :
(i) recevoir, par un serveur informatique, une requête pour un prix de tarif aérien, conjointement avec des paramètres définissant le tarif aérien,
(ii) configurer un ou plusieurs processeurs pour déterminer des prix estimés à partir d'un ensemble de données de prix historiques incomplet en analysant des motifs dans cet ensemble de données, à tout moment par rapport à l'étape (i) ci-dessus, dans lequel cette étape comprend :
(a) l'obtention de cotations de prix historiques à partir d'une mémoire de données informatique ;
(b) le groupement des cotations de prix historiques par catégorie ;
(c) la dérivation de statistiques pour chaque groupe ;
(d) le stockage sur un ordinateur pour chaque groupe d'un classificateur incluant les statistiques dérivées, et
(e) l'identification de groupes avec des classificateurs stockés auxquels le prix requis correspond ;
(iii) configurer un ou plusieurs processeurs pour calculer des estimations pour le prix de tarif aérien requis qui satisfont les paramètres, et calculer un ensemble d'estimations pour le prix de tarif aérien requis qui satisfont les paramètres sur une plage de dates spécifiée en utilisant des statistiques provenant des classificateurs stockés correspondant aux groupes identifiés ;
(iv) envoyer la requête à un serveur de système de distribution pour des prix de tarifs aériens ;
(v) recevoir en provenance du serveur de système de distribution les prix de tarifs aériens du serveur de système de distribution ;
(vi) comparer l'ensemble d'estimations calculé pour le prix de tarif aérien requis provenant de l'étape (iii) avec les prix de tarifs aériens du serveur de système de distribution reçus à l'étape (v) de manière à déduire une disponibilité de classe de tarif aérien du serveur de système de distribution, et
(vii) fournir, par le serveur informatique, la disponibilité de classe de tarif aérien déduite du serveur de système de distribution à un dispositif informatique.

2. Procédé selon la revendication 1, dans lequel la détermination de prix estimés est réalisée par déduction, dérivation ou prédiction de prix estimés.

3. Procédé selon l'une quelconque des revendications 1 à 2, dans lequel le serveur de système de distribution est un serveur de système de distribution globale.

4. Procédé selon l'une quelconque des revendications 1 à 3, dans lequel un prix de classe de tarif aérien déduit est inclus avec chaque disponibilité de classe de tarif aérien déduite.

5. Procédé selon l'une quelconque des revendications 1 à 4, dans lequel l'étape (vii) inclut l'envoi de la disponibilité de classe de tarif aérien déduite à un serveur.

6. Procédé selon l'une quelconque des revendications 1 à 5, dans lequel l'étape (ii) inclut l'utilisation de règles afin d'analyser des motifs dans l'ensemble de données.

7. Procédé selon l'une quelconque des revendications 1 à 6, dans lequel l'étape (ii) inclut une approche d'apprentissage automatique par classificateur bayésien naïf qui produit un modèle probabiliste de prix, et ce modèle est utilisé pour prédire des prix non observés.

8. Procédé selon l'une quelconque des revendications 1 à 7, dans lequel l'étape (ii) inclut la construction d'un modèle statistique à partir de prix historiques, l'identification de cotations candidates manquantes, et la tarification de cotations candidates sur la base du modèle statistique.

9. Procédé selon l'une quelconque des revendications 1 à 8, le procédé comprenant l'étape consistant à : inclure des prix de tarifs aériens mis en cache dans l'ensemble d'estimations de prix.

10. Serveur de déduction configuré pour déduire à partir d'un serveur de système de distribution quelles classes de tarifs aériens sont disponibles, le serveur de déduction étant configuré pour :
(i) recevoir une requête pour un prix de tarif aérien, conjointement avec des paramètres définissant le tarif aérien,
(ii) configurer un ou plusieurs processeurs pour déterminer des prix estimés à partir d'un ensemble de données de prix historiques incomplet en analysant des motifs dans cet ensemble de données, à tout moment par rapport à l'étape (i) ci-dessus, dans lequel la configuration comprend :
(a) l'obtention de cotations de prix historiques à partir d'une mémoire de données informatique ;
(b) le groupement des cotations de prix historiques par catégorie ;
(c) la dérivation de statistiques pour chaque groupe ;
(d) le stockage sur un ordinateur pour chaque groupe d'un classificateur incluant les statistiques dérivées, et
(e) l'identification de groupes avec des classificateurs stockés auxquels le prix requis correspond ;
(iii) configurer un ou plusieurs processeurs pour calculer des estimations pour le prix de tarif aérien requis qui satisfont les paramètres, et calculer un ensemble d'estimations pour le prix de tarif aérien requis qui satisfont les paramètres sur une plage de dates spécifiée en utilisant des statistiques provenant des classificateurs stockés correspondant aux groupes identifiés ;
(iv) envoyer la requête à un serveur de Système de Distribution pour des prix de tarifs aériens ;
(v) recevoir en provenance du serveur de système de distribution les prix de tarifs aériens du serveur de système de distribution ;
(vi) comparer l'ensemble d'estimations calculé pour le prix de tarif aérien requis provenant de l'étape (iii) avec les prix de tarifs aériens du serveur de système de distribution reçus à l'étape (v) de manière à déduire une disponibilité de classe de tarif aérien du serveur de système de distribution, et
(vii) fournir la disponibilité de classe de tarif aérien déduite du serveur de système de distribution à un dispositif informatique.

11. Produit de programme informatique incorporé dans un support de stockage non transitoire, le produit de programme informatique étant, lorsqu'il est exécuté sur un ordinateur agencé pour déduire à partir d'un serveur de système de distribution quelles classes de tarifs aériens sont disponibles, agencé pour :
(i) recevoir une requête pour un prix de tarif aérien, conjointement avec des paramètres définissant le tarif aérien,
(ii) configurer un ou plusieurs processeurs pour déterminer des prix estimés à partir d'un ensemble de données de prix historiques incomplet en analysant des motifs dans cet ensemble de données, à tout moment par rapport à l'étape (i) ci-dessus, comprenant
(a) l'obtention de cotations de prix historiques à partir d'une mémoire de données informatique ;
(b) le groupement des cotations de prix historiques par catégorie ;
(c) la dérivation de statistiques pour chaque groupe ;
(d) le stockage sur un ordinateur pour chaque groupe d'un classificateur incluant les statistiques dérivées, et
(e) l'identification de groupes avec des classificateurs stockés auxquels le prix requis correspond ;
(iii) configurer un ou plusieurs processeurs pour calculer un ensemble d'estimations pour le prix de tarif aérien requis qui satisfont les paramètres, et calculer des estimations pour le prix de tarif aérien requis qui satisfont les paramètres sur une plage de dates spécifiée en utilisant des statistiques provenant des classificateurs stockés correspondant aux groupes identifiés ;
(iv) envoyer la requête à un serveur de Système de Distribution pour des prix de tarifs aériens ;
(v) recevoir en provenance du serveur de système de distribution les prix de tarifs aériens du serveur de système de distribution ;
(vi) comparer l'ensemble d'estimations calculé pour le prix de tarif aérien requis provenant de l'étape (iii) avec les prix de tarifs aériens du serveur de système de distribution reçus à l'étape (v) de manière à déduire une disponibilité de classe de tarif aérien du serveur de système de distribution, et
(vii) fournir la disponibilité de classe de tarif aérien déduite du serveur de système de distribution à un dispositif informatique.
